# EUROPEAN PATENT SPECIFICATION

(11) **EP 2 211 165 B1**
(45) Date of publication and mention of the grant of the patent: **26.07.2017**
(21) Application number: 10000521.4
(22) Date of filing: 20.01.2010
(51) Int. Cl.: G01N 15/14, G01N 35/00, G06K 9/03, G06K 9/00, G01N 1/28, G01N 1/31

(54) **Cell image processing apparatus, cell image processing method and computer program product**
Zellenabbildungsverarbeitungsvorrichtung, Zellenabbildungsverarbeitungsverfahren und Computerprogramm
Appareil de traitement d'images cellulaires, procédé de traitement d'images cellulaires et produit de programme informatique

(30) Priority: 21.01.2009 JP 2009011303
(43) Date of publication of application: 28.07.2010
(73) Proprietor: Sysmex Corporation, Kobe-shi, Hyogo 651-0073 (JP)
(72) Inventor: Yamada, Kazuhiro, Kobe-shi, Hyogo 651-0073 (JP)
(74) Representative: Hoffmann Eitle

(56) References cited:
- WO-A2-2009/009779
- JP-A- H0 465 676
- US-A1- 2007 179 715
- TOKIYA ABE ET AL: "Color Correction of Pathological Images Based on Dye Amount Quantification", OPTICAL REVIEW, SPRINGER, BERLIN, DE, vol. 12, no. 4, 1 July 2005 (2005-07-01), pages 293-300, XP019353289, ISSN: 1349-9432, DOI: 10.1007/S10043-005-0293-6

## Description

### FIELD OF THE INVENTION

The present invention relates to a cell image processing apparatus, a cell image processing method, and a computer program product, for processing a cell image obtained by imaging a specimen smeared on a slide glass.

### BACKGROUND

Conventionally, for example, in US Patent No. 4,761,075, there is disclosed a cell image classifying apparatus which magnifies and images a stained blood smeared on a slide glass by using a microscope and analyzes the obtained image so as to carry out classification and counting of the blood cells.

In US Patent No. 4,761,075, there is disclosed a cell classifying apparatus which images a normally stained specimen (May Giemsa stain), classifies the white blood cells and the red blood cells from the obtained image, counts reticulocytes from an image obtained by imaging a supravital stained specimen, and detects abnormal white blood cells from an image obtained by imaging a peroxidase stained specimen. When data of all stained specimen is in a normal range, the cell classifying apparatus classifies this specimen into a normal specimen group. When any of the data of the all stained specimen is not in the normal range, the cell classifying apparatus determines whether or not there is a need to carry out a detailed analysis. In addition, the cell classifying apparatus implements an automatic detailed reexamination for increasing the analytical precision further more on a quasi-positive specimen difficult to determine whether it is normal or abnormal.

In the cell image classifying apparatus as described above, when the stain has not been normally carried out on the blood smeared on the slide glass or when an imaging unit including a light source and a camera is something wrong, it is difficult or impossible to carry out the classification, the count and the like of the blood cells with good accuracy. For this reason, in order normally carry out the classification and count of the blood cells all the time, there is a need to keep the stained state of the smeared blood and the state of the imaging unit in a normal state. However, in the cell classifying apparatus disclosed in US Patent No. 4,761,075, there are not provided functions for a user to confirm the stained state of the smeared blood and the state of the imaging unit. Therefore, for example, the user compares the classification/count result of the blood cells obtained by a cell classifying apparatus with the classification/count result of the blood cells obtained by a visual check by the user using a microscope so as to confirm the stained state of the smeared blood and the state of the imaging unit. Such a confirmation task makes the burden too heavy for the user, and deviations in results may occur according to the skill and experience of the user carrying out the visual check.

Document WO 2009/009779 A2 relates to automated bone marrow cellularity determination. In particular, WO 2009/009779 A2 discloses a cell image processing apparatus comprising an imaging unit for imaging a specimen smeared on a slide glass and obtaining a cell image of a cell included in the smeared specimen, a display, a staining unit for staining the cell included in the specimen smeared on the slide glass, and a processing unit being configured to perform the operation of obtaining a characteristic value based on a plurality of cell images obtained by the imaging unit, the characteristic value representing a predetermined characteristic of each of the plurality of cell images. The document by Tokiya Abe et al.: "Color Correction of Pathological Images Based on Dye Amount Quantification", Optical Review , vol. 12, no. 4, 01 July 2005, relates to a method for color correction for hematoxylin and eosin (H&E) stained pathological images in which the amounts of H&E dyes are estimated based on multispectral imaging technique and Beer Lambert law.

Document JP H04 65676 A relates to automatic analysis of specific samples by previously registering the identification number of a rack having the samples to be reanalyzed.

Document US 2007/179715 A1 relates to an automatic blood analyzer.

### SUMMARY

The scope of the present invention is defined solely by the appended claims, and is not affected to any degree by the statements within this summary.

A first aspect of the present invention is a cell image processing apparatus provided by claim 1 comprising:
an imaging unit for imaging a specimen smeared on a slide glass, and obtaining a cell image of a cell included in the smeared specimen;
a display; and
a processing unit being configured to perform operations comprising:
   obtaining a plurality of characteristic values based on a plurality of cell images obtained by the imaging unit, each of the plurality of characteristic values respectively representing a predetermined characteristic of each of the plurality of cell images; and
   controlling the display so as to display a screen showing a temporal fluctuation in the obtained characteristic values, the cell image processing apparatus further comprising a staining unit for staining the cell included in the specimen smeared on the slide glass,
   wherein the processing unit obtains a first characteristic value representing a state of a staining unit, said first characteristic value relating to a brightness value of a color component of pixels in a nucleus area in the cell image, and obtains a second characteristic value representing a state of the imaging unit, said second characteristic value relating to a brightness value of a color component of pixels in a background area in the cell image.

According to the above-described configuration, the stained state of the smeared specimen or the state of the imaging unit can be easily confirmed.

According to the above-described configuration, since a first characteristic value representing the state of the staining unit and a second characteristic value representing the state of the imaging unit can be obtained on the basis of one cell image, the processing unit can rapidly carry out processing.

A sub-aspect of the present invention is an apparatus according to claim 2, wherein the processing unit controls the display so as to display the screen which comparably shows the characteristic values and an index relating to an abnormality of the characteristic value. According to the above-described configuration, the maintenance of the smearing unit or the imaging unit can be carried out before the stained state of the smeared specimen or the state of the imaging unit becomes abnormal.

A further sub-aspect of the present invention is an apparatus according to claim 3, wherein the processing unit controls the display so as to display the screen which shows daily fluctuation of the characteristic values in chronological order.

A further sub-aspect of the present invention is an apparatus according to claim 4, wherein the imaging unit is configured to obtain the cell image including a brightness of a predetermined color component; and the processing unit obtains information relating to the brightness of the predetermined color component of the cell image as the characteristic value.

A further sub-aspect of the present invention is an apparatus according to claim 5, further comprising a smearing unit for smearing the specimen on the slide glass.

A further sub-aspect of the present invention is an apparatus according to claim 6, wherein the processing unit is configured to perform operations comprising:
correcting a brightness of the cell image obtained by the imaging unit; and
obtaining the first characteristic value representing a state of the staining unit based on an image of a cell portion in the corrected cell image.

A further sub-aspect of the present invention is an apparatus according to claim 7, wherein the imaging unit comprises a light source; and the processing unit obtains the second characteristic value representing a light intensity of the light source.

A further sub-aspect of the present invention is an apparatus according to claim 8, wherein the processing unit is configured to perform operations comprising:
obtaining a plurality of numerical values, based on each of a plurality of cell images obtained by the imaging unit in a predetermined period of time, each of the plurality of numerical values respectively representing the predetermined characteristic of each of the plurality of cell images; and obtaining the characteristic value based on the plurality of obtained numerical values.

A further sub-aspect of the present invention is an apparatus according to claim 9, wherein the processing unit obtains the plurality of numerical values based on each of a plurality of cell images which are obtained from specimens meeting a predetermined condition among a plurality of specimens imaged by the imaging unit in the predetermined period of time.

A further sub-aspect of the present invention is an apparatus according to claim 10, wherein the processing unit is configured to perform operations comprising:
receiving a shutdown instruction; and controlling the display so as to display the screen based on the received shutdown instruction.

According to the above-described configuration, the above-described screen is reliably displayed when the apparatus is shut down. Therefore, the user can be prevented from forgetting to check the stained state of the smeared specimen and the state of the imaging unit.

A further sub-aspect of the present invention is an apparatus according to claim 11, wherein the processing unit is configured to perform operations comprising:
detecting an abnormality of the characteristic value by comparing the characteristic value with a predetermined standard value for each specimen; and
controlling the display so as to display information relating to the abnormality of the characteristic value when the abnormality of the characteristic value has been detected. According to the above-described configuration, the abnormality of the stained state of the smeared specimen and the abnormality of the state of the imaging unit can be detected for each specimen.

A further sub-aspect of the present invention is an apparatus according to claim 12, wherein the processing unit classifies the cell based on the cell image.

(13) A second aspect of the present invention is a cell image processing method according to claim 13 comprising:
imaging a plurality of specimens each smeared on a slide glass, and obtaining a plurality of cell images, each of the plurality of cell images respectively relating to a cell included in each of the smeared specimens;
obtaining a plurality of characteristic values based on the plurality of cell images, each of the plurality of characteristic values respectively representing a predetermined characteristic of each of the plurality of cell images; and
displaying a screen showing a temporal fluctuation in the characteristic values on a display
   the cell image processing method further comprising staining the cell included in the specimen smeared on the slide glass,
wherein obtaining a plurality of characteristic values based on the plurality of cell images comprises obtaining a first characteristic value representing a state of a staining unit, said first characteristic value relating to a brightness value of a color component of pixels in a nucleus area in the cell image, and obtaining a second characteristic value representing a state of an imaging unit, said second characteristic value relating to a brightness value of a color component of pixels in a background area in the cell image.

According to the above-described configuration, the stained state of the smeared specimen or the state of the imaging unit can be easily confirmed.

(14) A third aspect of the present invention is a computer program product according to claim 14 comprising:
a computer readable medium; and
instructions, on the computer readable medium, adapted to enable a general purpose computer to perform operations comprising:
   obtaining a plurality of cell images, each of the plurality of cell images respectively relating to a cell included in each of specimens each smeared on a slide glass;
   obtaining a plurality of characteristic values based on the plurality of cell images, each of the plurality of characteristic values respectively representing a predetermined characteristic of each of the plurality of cell images; and
   controlling a display so as to display a screen which shows a temporal fluctuation in the characteristic values,
wherein obtaining a plurality of characteristic values based on the plurality of cell images comprises obtaining a first characteristic value representing a state of a staining unit, said first characteristic value relating to a brightness value of a color component of pixels in a nucleus area in the cell image, and obtaining a second characteristic value representing a state of an imaging unit, said second characteristic value relating to a brightness value of a color component of pixels in a background area in the cell image.

According to the above-described configuration, the stained state of the smeared specimen or the state of the imaging unit can be easily confirmed.

### BRIEF DESCRIPTION OF THE DRAWINGS

Fig. 1A is a plan view showing an entire configuration of a specimen processing system according to an embodiment;
Fig. 1B is a perspective view showing a part of the configuration of the specimen processing system according to the embodiment;
Fig. 2 is a diagram showing a part of a slide glass;
Fig. 3 is a block diagram showing a configuration of a smear slide preparing apparatus according to an embodiment;
Fig. 4 is a block diagram showing a configuration of a specimen imaging apparatus according to an embodiment;
Fig. 5 is a perspective view showing a part of a configuration of a microscope unit according to an embodiment;
Fig. 6 is a block diagram showing a configuration of an image processing unit according to an embodiment;
Fig. 7A is a schematic view showing a configuration of a specimen database according to an embodiment;
Fig. 7B is a schematic view showing a configuration of a blood cell database according to an embodiment;
Fig. 7C is a schematic view showing a configuration of a characteristic value history database according to an embodiment;
Fig. 8 is a block diagram showing a configuration of a blood cell image display unit according to an embodiment;
Fig. 9 is a block diagram showing a schematic configuration of a measuring unit of the blood cell analyzing apparatus according to an embodiment;
Fig. 10 is a block diagram showing a configuration of an information processing unit of the blood cell analyzing apparatus according to the embodiment;
Fig. 11 is a flowchart showing the flow of an operation of the information processing unit of the blood cell analyzing apparatus according to the embodiment;
Fig. 12 is a flowchart showing an operation sequence of the microscope unit in a registration operation of a blood cell image;
Fig. 13A is a flowchart (first half) of an operation sequence of an image processing unit in the registration operation of the blood cell image;
Fig. 13B is a flowchart (second half) of the operation sequence of the image processing unit in the registration operation of the blood cell image;
Fig. 14 is a diagram explaining a scanning pattern of a specimen on the slide glass in a white blood cell detection;
Fig. 15A is a diagram explaining a field of view of a line sensor for white blood cell detection;
Fig. 15B is a diagram showing the signal waveform of the line sensor for white blood cell detection;
Fig. 16A is a diagram showing an example of a corrected blood cell image in a case where a normal stain is carried out;
Fig. 16B is a diagram showing an example of the corrected blood cell image in a case where staining abnormality occurs;
Fig. 17A is a diagram showing an example of an uncorrected blood cell image which is obtained by the imaging under normal lamp light intensity;
Fig. 17B is a diagram showing an example of the uncorrected blood cell image which is obtained by the imaging under low lamp light intensity;
Fig. 18A is a diagram showing an error screen for notifying the occurrence of the lamp light intensity abnormality;
Fig. 18B is a diagram showing an error screen for notifying the occurrence of the staining abnormality;
Fig. 19A is a flowchart showing a sequence of an initial operation of a blood cell image displaying unit in a blood cell image display operation;
Fig. 19B is a flowchart showing a sequence of a specimen information transmitting operation of the image processing unit in the blood cell image display operation;
Fig. 20A is a flowchart showing a sequence of the image display operation of the blood cell image display unit in a blood cell image display operation;
Fig. 20B is a flowchart showing a sequence of a blood cell image transmitting operation of the image processing unit in the blood cell image display operation;
Fig. 21 is a diagram showing an example of a blood cell image review screen;
Fig. 22 is a flowchart showing the flow of a shutdown operation of the image processing unit;
Fig. 23 is a diagram showing an example of an accuracy management screen;
Fig. 24A is a diagram showing an example of a first graph, a second graph, and a third graph; and
Fig. 24B is a diagram showing another example of the first graph, the second graph, and the third graph.

### DETAILED DESCRIPTION OF THE EMBODIMENTS

Hereinafter, exemplary embodiments according to the invention will be described with reference to the drawings.

A specimen processing system according to this embodiment is provided, in which a blood smear slide is prepared from a blood specimen; the stained blood smear slide is magnified and imaged by a microscope; by processing the obtained blood cell image, a characteristic value indicating the characteristic of the blood cell image is calculated; and a fluctuation in the characteristic value is displayed on a screen.

### [Configuration of Specimen Processing System]

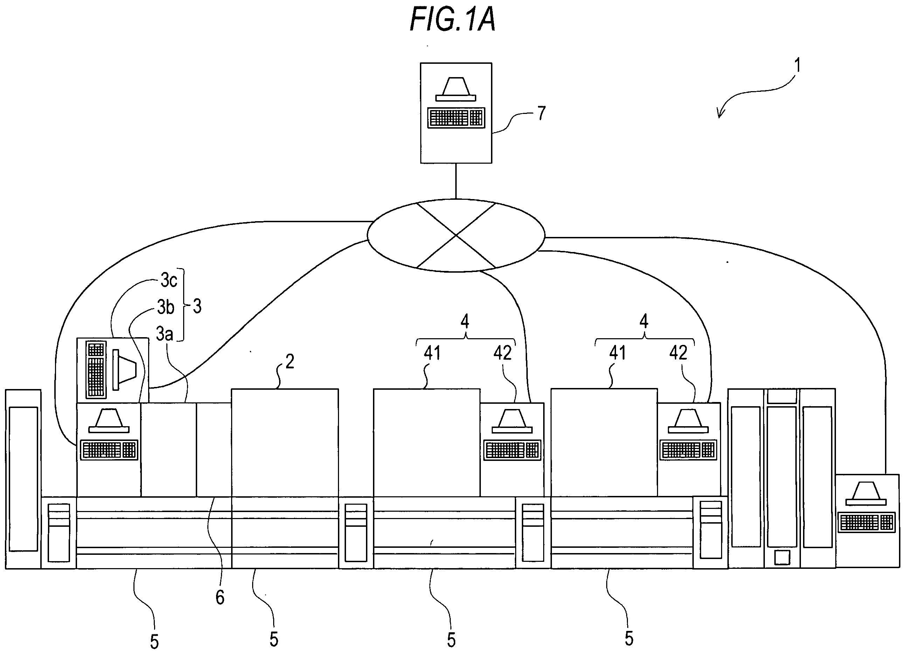

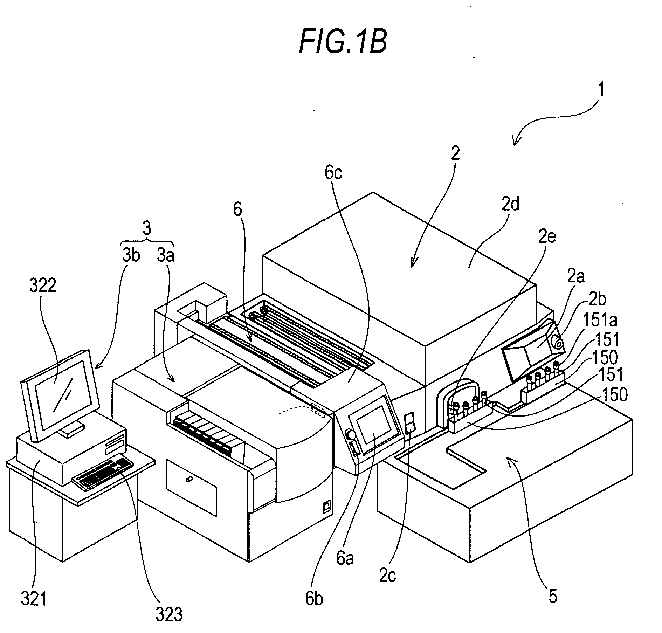

Fig. 1A is a plan view showing the entire configuration of the specimen processing system according to this embodiment. Fig. 1B is a perspective view showing a portion of the specimen processing system. As shown in Fig. 1A, the specimen processing system 1 is provided with a smear slide preparing apparatus 2, a specimen imaging apparatus 3, and a blood cell analyzing apparatus 4. The smear slide preparing apparatus 2, the specimen imaging apparatus 3, and the blood cell analyzing apparatus 4 are connected to a host computer 7 for registering a measuring order and providing the measuring order via a communication network so as to perform communication therewith. In addition, the blood cell analyzing apparatus 4 and the smear slide preparing apparatus 2 are connected by a specimen transport apparatus 5 which transports a blood specimen contained in a test tube. The specimen analyzed by the blood cell analyzing apparatus 4 is transported to the smear slide preparing apparatus 2. Using the specimen, the smear slide preparing apparatus 2 prepares a smear slide. The prepared smear slide is imaged by the specimen imaging apparatus 3 and the blood cell classification is carried out by the image processing.

### <Configuration of Smear Slide Preparing Apparatus>

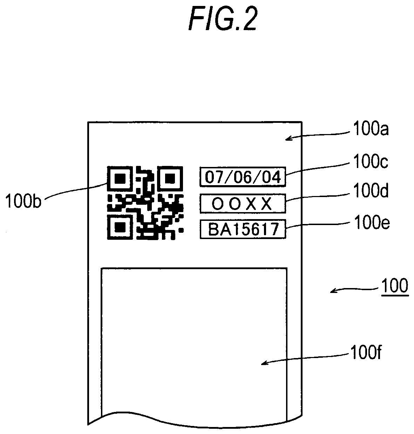

The smear slide preparing apparatus 2 (for example, a smear slide preparing apparatus SP-1000i made by Sysmex Corporation) aspirates a blood specimen and drops the blood specimen onto the a slide glass 100 on which the blood specimen is spread thin and dried, and supplies a stain solution to the slide glass 100 to stain the blood on the slide glass 100. In this manner, a smear slide is prepared. Further, the smear slide preparing apparatus 2 can process and prepare 120 smear slides per 1 hour. Fig. 2 is a diagram showing a portion of the slide glass 100. As shown in Fig. 2, on a frosted section (information display area) 100a of the slide glass 100 which is prepared by the smear slide preparing apparatus 2, a two-dimensional bar-code 100b including specimen information such as a specimen number (ID), a date, a reception number, a name, and the like, a date 100c ("07/06/04" in Fig. 2) as attribute information included in the specimen information, a patient's name 100d ("OOXX" in Fig. 2), and a portion 100e of the specimen number (ID) ("BA15617" in Fig. 2) are printed by a thermal-transfer printer (not shown) which is built in the smear slide preparing apparatus 2.

In addition, as shown in Fig. 1 B, the smear slide preparing apparatus 2 includes a display operating section 2a constituted by a touch panel, a start switch 2b, a power switch 2c, and a cover 2d. In addition, the smear slide preparing apparatus 2 is provided with a hand section 2e for transferring a test tube 151 containing a blood from the specimen transport apparatus 5 to the smear slide preparing apparatus 2. The test tube 151 containing the blood is mounted with a rubber stopper 151a. In addition, as shown in Fig. 1B, the specimen transport apparatus 5 is provided to automatically transport a specimen rack 150, which accommodates the test tube 151 containing the blood, to the smear slide preparing apparatus 2.

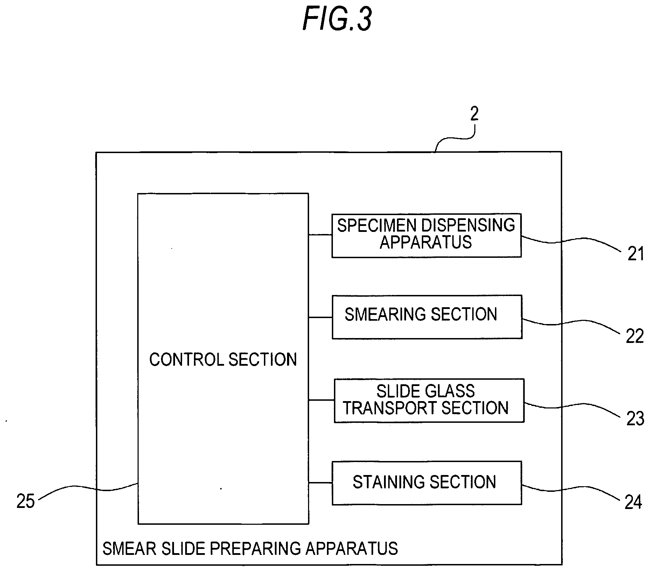

Fig. 3 is a block diagram showing the configuration of the smear slide preparing apparatus 2. As shown in Fig. 3, the smear slide preparing apparatus 2 is provided with a specimen dispensing section 21, a smearing section 22, a slide glass transport section 23, a staining section 24, and a control section 25.

The specimen dispensing section 21 includes an aspiration tube (not shown). The aspiration tube is stuck into the rubber stopper 151 a of the test tube 151 in the specimen rack 150 transported by the specimen transport apparatus 5 to aspirate the blood specimen from the test tube 151. The specimen dispensing section 21 is configured to drop the aspirated blood specimen onto a slide glass 100. The smearing section 22 is configured to smear and dry the blood specimen dropped onto the slide glass 100 and perform printing on the slide glass 100.

The slide glass transport section 23 is provided to accommodate the slide glass 100 on which the blood specimen is smeared by the smearing section 22 in a cassette (not shown) and to transport the cassette. The staining section 24 supplies a stain solution to the slide glass 100 in the cassette transported to a staining position by the slide glass transport section 23. The control section 25 controls the specimen dispensing section 21, the smearing section 22, the slide glass transport section 23 and the staining section 24 so as to perform the above smear slide preparing operation. The smear slide prepared in this manner is delivered to a specimen transport apparatus 6.

### <Configuration of Specimen Transport Apparatus>

As shown in Fig. 1B, the specimen transport apparatus 6 is provided between the smear slide preparing apparatus 2 and the specimen imaging apparatus 3. The specimen transport apparatus 6 is provided to transport the slide glass 100 which is accommodated to the cassette received from the smear slide preparing apparatus 2 to the specimen imaging apparatus 3. In addition, as shown in Fig. 1B, the specimen transport apparatus 6 includes a display section 6a, a power switch 6b, and a cover 6c. As shown in Fig. 3, the specimen transport apparatus 6 is configured to transfer the slide glass 100 as the imaging target to the specimen imaging apparatus 3 via a transferring port 6d.

### <Configuration of Specimen Imaging Apparatus>

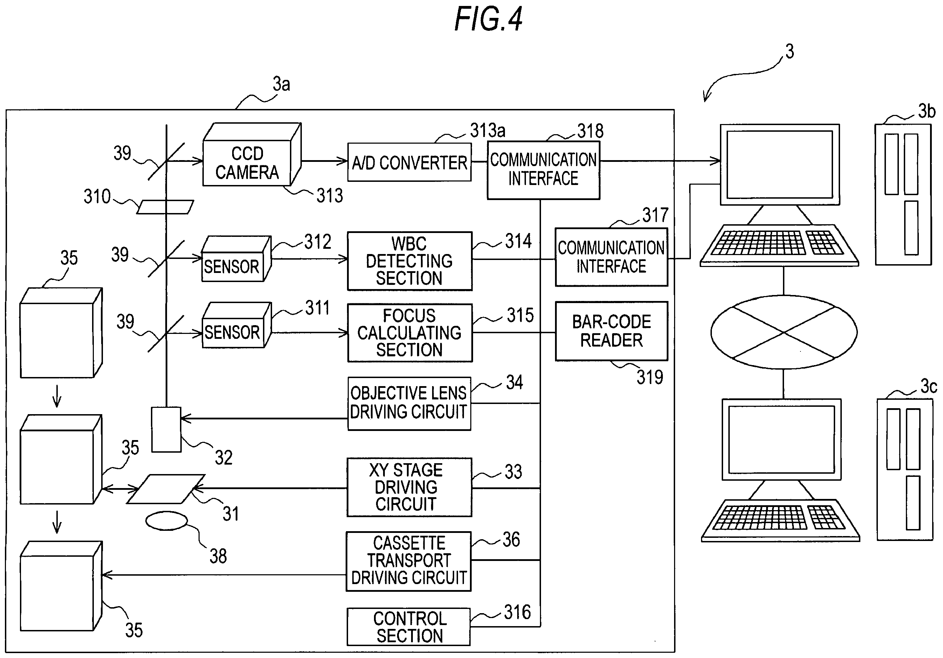

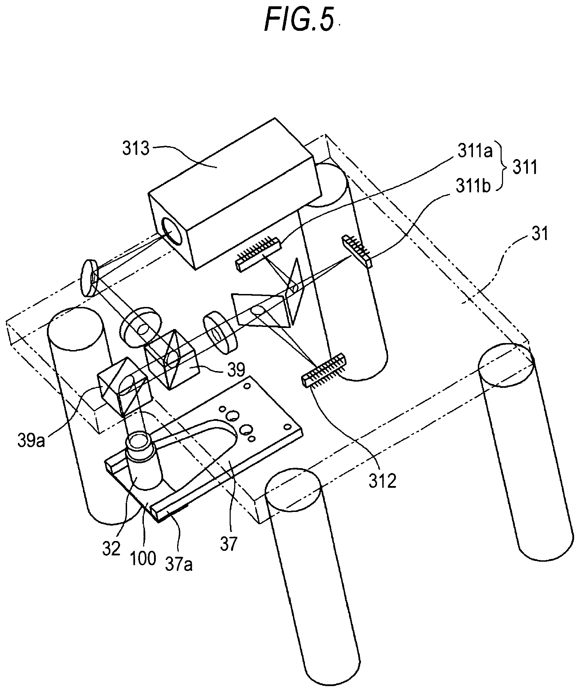

Fig. 4 is a block diagram showing the configuration of the specimen imaging apparatus according to this embodiment. Further, Fig. 4 schematically shows the configuration of the apparatus. The arrangement of sensors, a slide cassette and the like may be slightly different from the actual arrangement to enable an easier understanding. For example, in Fig. 4, a sensor for WBC detection and a sensor for auto-focusing are respectively arranged on the upper and lower sides. However, in fact, as shown in Fig. 5 to be described later, both of the sensors are arranged in substantially the same plane.

The specimen imaging apparatus 3 includes a microscope unit 3a for imaging a magnified image of a blood smear slide which is focused by auto-focusing, an image processing unit 3b for processing a captured image to classify white blood cells in blood and performing a counting operation for each classification of the white blood cell, and a blood cell image display unit 3c which is connected to the image processing unit 3b and displays the captured image, analysis results and the like. The image processing unit 3b and the blood cell image display unit 3c may not be provided independently of each other, but integrally with each other. The above-described specimen transport apparatus 6 is disposed near the specimen imaging apparatus 3 and a blood smear slide prepared by the smear slide preparing apparatus 2 is automatically supplied to the microscope unit 3a by the specimen transport apparatus 6.

### <Configuration of Microscope Unit 3a>

Fig. 5 is a perspective view showing a portion of the configuration of the microscope unit 3a. The microscope unit 3a includes an objective lens 32 which is a portion of a lens system of a microscope magnifying an image of blood thinly spread and applied over the slide glass 100 mounted on an XY stage 31. The XY stage 31 holding a specimen (the slide glass 100 with an upper surface on which the blood is smeared) can be moved back and forth and from side to side (X and Y directions) by a driving section (not shown), the driving of which is controlled by an XY stage driving circuit 33 (see Fig. 4 for reference). The objective lens 32 can be moved up and down (Z direction) by a driving section (not shown), the driving of which is controlled by an objective lens driving circuit 34.

A plurality of the slide glasses 100 are stacked and accommodated in a slide cassette 35. The slide cassette 35 is transported by a transporting section (not shown) which is controlled by a cassette transport driving circuit 36 so as to be driven. The XY stage 31 is provided with a chuck section 37 (see Fig. 5 for reference) capable of holding two parts in the vicinities of both ends in the longitudinal direction of the slide glass 100, and the chuck section can be freely advanced and retracted with respect to the slide glass 100 accommodated in the slide cassette 35 which is stopped at a predetermined position. The chuck section 37 is advanced toward the slide cassette 35 to hold the slide glass 100 by an opening-closing operation of claw sections 37a which can be freely opened and closed and each of which is formed at the tip of the chuck section 37. Then, the chuck section 37 is retracted to draw the slide glass 100 from the slide cassette 35 so that the slide glass can be disposed at a predetermined position on the XY stage 31.

A lamp 38 as a light source is disposed below the slide glass 100, and light from the lamp 38 passes through the blood on the slide glass 100, and via half mirrors 39 and an interference filter 310 arranged on an optical path, enters a line sensor 311 for auto-focusing in which plural pixels are arranged in a line, a sensor 312 for white blood cell (WBC) detection in which plural pixels are arranged in a line and a CCD camera 313. A white blood cell detecting section 314 composed of an FPGA, an ASIC or the like is connected to the sensor 312 for white blood cell detection and is set up to provide the output signal of the sensor 312 to the white blood cell detecting section 314. A focus calculating section 315 composed of an FPGA, an ASIC or the like is connected to the sensor 311 for auto-focusing and is set up to provide the output signal of the sensor 311 to the focus calculating section 315. White blood cell detection is performed by the white blood cell detecting section 314 on the basis of an output signal in accordance with the incident light of the sensor 312. Information to be used for the auto-focus operation is calculated by the focus calculating section 315 on the basis of an output signal in accordance with the incident light of the sensor 311. The auto-focus operation is performed on the basis of this information.

In addition, the microscope unit 3a includes a control section 316 and communication interfaces 317 and 318. The control section 316 includes a CPU and a memory, and is connected to the XY stage driving circuit 33, the objective lens driving circuit 34, the cassette transport driving circuit 36, the white blood cell detecting section 314, the focus calculating section 315 and the communication interfaces 317 and 318 so as to communicate therewith. When the control section 316 executes a control program stored in the memory, the above-described mechanisms are controlled.

The communication interface 317 is an Ethernet (registered trade name) interface. The communication interface 317 is connected to the image processing unit 3b via a communication cable so as to perform data communication therewith. In addition, the communication interface 318 is connected to the CCD camera 313 via an A/D converter 313a and is connected to the image processing unit 3b via a communication cable. An image signal (analog signal) output from the CCD camera 313 is A/D converted by the A/D converter 313a and image data (digital data) output from the A/D converter 313a is provided to the communication interface 318 to be transmitted to the image processing unit 3b.

Moreover, the microscope unit 3a includes a two-dimensional bar-code reader 319. As described above, a two-dimensional bar-code indicating a specimen ID is printed on a frosted section 100a of the slide glass 100 and the two-dimensional bar-code of the slide glass 100 introduced into the microscope unit 3a is read by the two-dimensional bar-code reader 319. In this manner, the read specimen ID is provided to the control section 316.

### <Configuration of Image Processing Unit 3b>

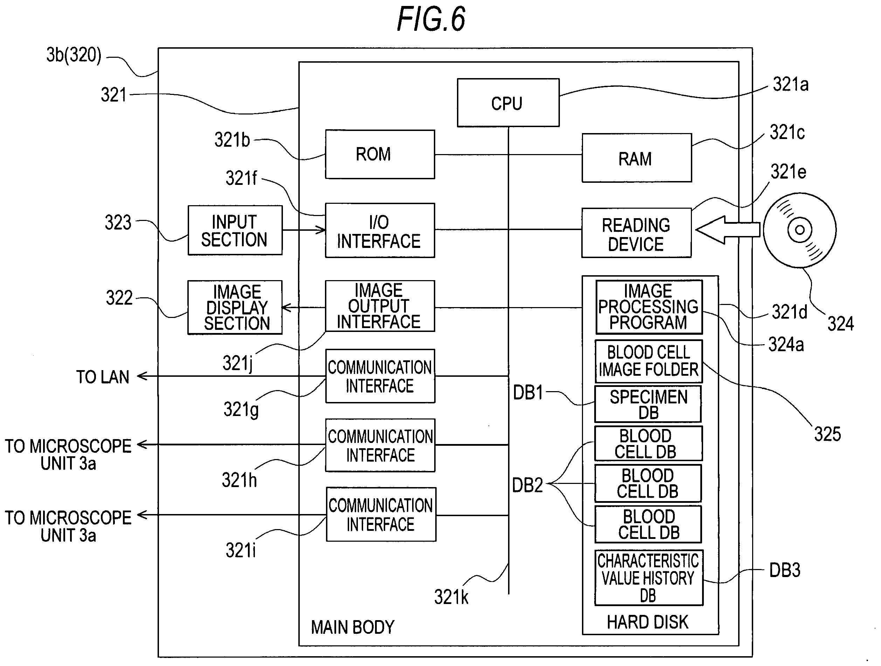

Next, the configuration of the image processing unit 3b will be described. Fig. 6 is a block diagram showing the configuration of the image processing unit 3b. The image processing unit 3b is realized by a computer 320. As shown in Fig. 6, the computer 320 includes a main body 321, an image display section 322 and an input section 323. The main body 321 includes a CPU 321 a, a ROM 321 b, a RAM 321 c, a hard disk 321 d, a reading device 321 e, an I/O interface 321f, communication interfaces 321g, 321 h, and 321 i and an image output interface 321 j. The CPU 321 a, the ROM 321 b, the RAM 321c, the hard disk 321 d, the reading device 321 e, the I/O interface 321f, the communication interface 321 g, a communication interface 321 h, a communication interface 321 i and the image output interface 321j are connected by a bus 321 k.

The CPU 321 a can execute a computer program loaded to the RAM 321 c. The CPU 321 a executes an image processing program 324a to be described later, so that the computer 320 functions as the image processing unit 3b.

The ROM 321 b is composed of a mask ROM, a PROM, an EPROM, an EEPROM or the like, and the computer program which is executed by the CPU 321 a and data used or the like for the computer program are recorded therein.

The RAM 321 c is composed of a SRAM, a DRAM or the like. The RAM 321 c is used to read the image processing program 324a recorded in the hard disk 321d. Moreover, the RAM is used as an operating area of the CPU 321 a when the CPU 321 a executes a computer program.

In the hard disk 321 d, various computer programs for execution by the CPU 321 a, such as an operating system and an application program, and data which are used to execute the computer programs are installed. The image processing program 324a to be described later is also installed in the hard disk 321d.

The hard disk 321 d is provided with a blood cell image folder 325 for storing blood cell images. In the blood cell image folder 325, a folder is provided for each specimen and blood cell images obtained as described later are stored in the folder. The folder provided for each specimen has a folder name including a specimen ID, and the folder corresponding to a desired specimen ID can be specified by the specimen ID. The blood cell image folder 325 is set up so as to share data with the blood cell image display unit 3c and the blood cell image display unit 3c can access files stored in the blood cell image folder 325.

Further, the hard disk 321d is provided with a specimen database DB1 for storing information relating to specimens, a blood cell database DB2 for storing results of the classification of white blood cells by image processing, and a characteristic value history database DB3 for storing an average nucleus G-value which is a characteristic value relating to the staining and an average background G-value which is a characteristic value relating to the microscope unit 3a.

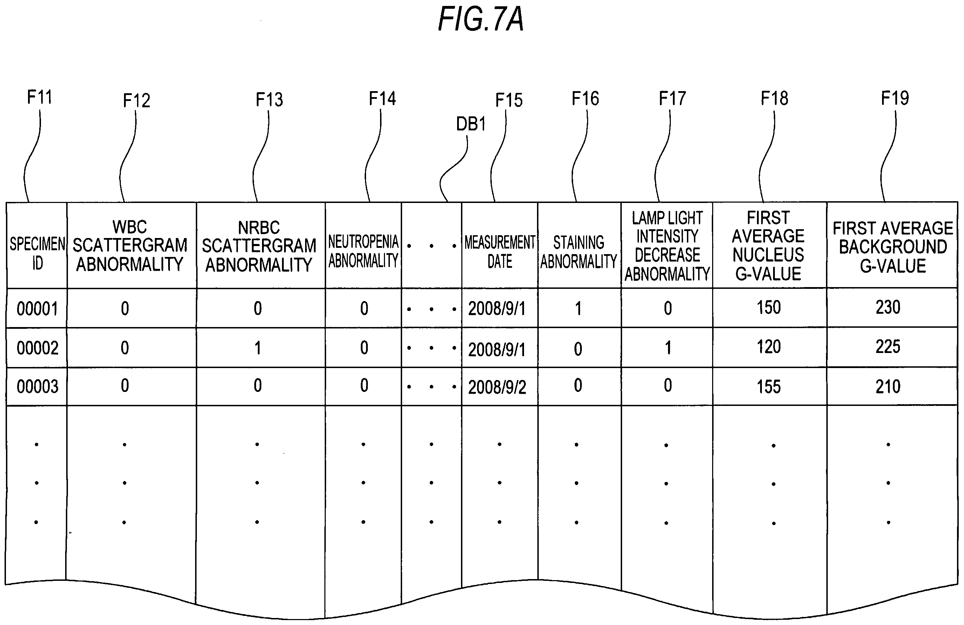

Fig. 7A is a schematic view showing the configuration of the specimen database DB1. The specimen database DB1 includes a specimen field F11 for storing specimen IDs, fields F12, F13, F14... for storing various information on results that are determined to be abnormal such as information showing whether or not a white blood cell scattergram abnormality is confirmed (white blood cell scattergram abnormality flag) by the blood cell analyzing apparatus 4, information showing whether or not an NRBC (nucleated red blood cell) scattergram abnormality is confirmed (NRBC scattergram abnormality flag) by the blood cell analyzing apparatus 4, and information showing whether or not a neutropenia abnormality is confirmed (neutropenia abnormality flag) by the blood cell analyzing apparatus 4. The specimen database DB1 also includes a field F15 for storing dates of measurements performed by the specimen imaging apparatus 3, a staining abnormality field F16 for storing information showing whether or not a staining abnormality has occurred (staining abnormality flag), and a light intensity abnormality field F17 for storing information showing whether or not a lamp light intensity abnormality has occurred (lamp light intensity abnormality flag). The specimen database DB1 also includes a first average nucleus G-value field F18 for storing a first average nucleus G-value to be described and a first average background G-value field F19 for storing a first average background G-value to be described later. In the fields storing the information showing abnormalities, such as the white blood cell scattergram abnormality field F12, the NRBC scattergram abnormality field F13, the neutropenia abnormality field F14, the staining abnormality field F16 and the light intensity abnormality field F17, "0" is stored when an abnormality has not occurred, and "1" is stored when an abnormality has occurred. Although omitted for the simplicity of the drawing, the specimen database DB1 is provided with a field for storing the numerical data of the analysis results (the number of white blood cells, the number of red blood cells, et al.) from the blood cell analyzing apparatus 4. Moreover, the specimen database DB1 is also provided with a field for storing patients' names, a field for storing information specifying a hospital ward, a field for storing patients' ages, a field for storing a number N of white blood cells counted, and the like.

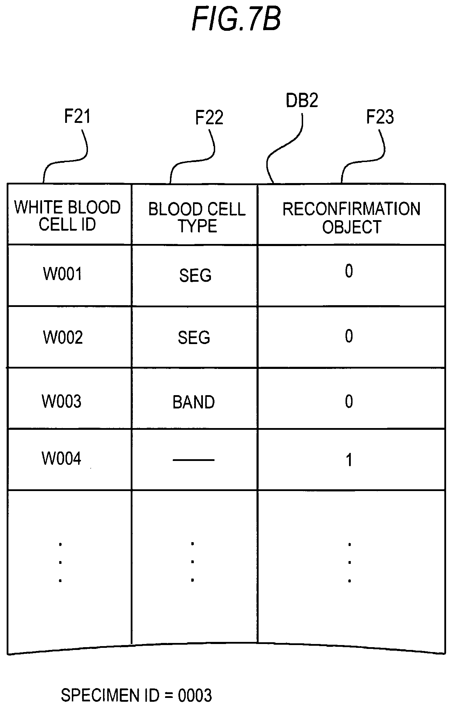

Fig. 7B is a schematic view showing a configuration of the blood cell database DB2. The blood cell database DB2 is provided for each specimen and each blood cell database DB2 includes data indicating a specimen ID. As a result, the blood cell database DB2 corresponding to the specimen ID can be specified. The blood cell database DB2 is provided with a white blood cell ID field F21 for storing white blood cell IDs specifying the white blood cells, a type field F22 for storing classification results of the white blood cells, and a reconfirmation object field F23 for storing information for specifying the white blood cells which cannot be classified. In the reconfirmation object field F23, "0" is stored when the white blood cells are normally classified, and "1" is stored when the white blood cells cannot be classified so as to be a reconfirmation object.

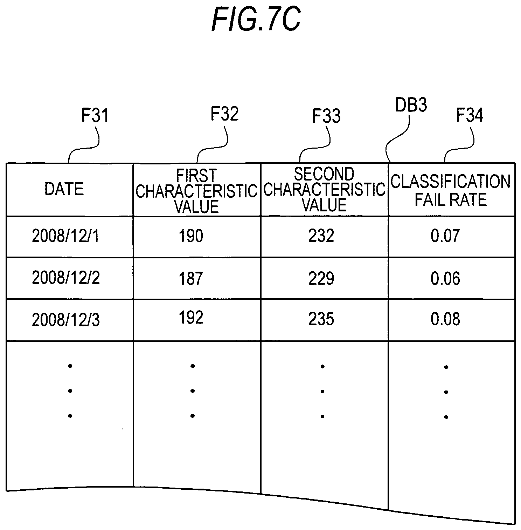

Fig. 7C is a schematic view showing the configuration of the characteristic value history database DB3. The characteristic value history database DB3 is provided with a date field F31 for storing date information, a first characteristic value field F32 for storing a second average nucleus G-value, a second characteristic value field F33 for storing a second average background G-value, and a classification fail rate field F34 for storing a classification fail rate. Further the second average nucleus G-value, the second average background G-value, and the classification fail rate will be described later.

The reading device 321 e is composed of a flexible disk drive, a CD-ROM drive, a DVD-ROM drive or the like and can read the computer program or data recorded in a portable recording medium 324. In the portable recording medium 324, the image processing program 324a is stored which prompts the computer to function as the image processing unit 3b. The computer 320 can read the image processing program 324a from the portable recording medium 324 and install the image processing program 324a in the hard disk 321d.

The image processing program 324a is not only provided by the portable recording medium 324 but can be also provided from an external device, which is connected to the computer 320 by an electric communication line (which may be wired or wireless) to communicate therewith via the electric communication line. For example, the image processing program 324a may be stored in the hard disk of a server computer on the internet and the computer 320 may access the server computer to download the computer program and install the computer program in the hard disk 321d.

Furthermore, in the hard disk 321 d, for example, a multitasking operating system is installed such as Windows (registered trade name) which is made and distributed by Microsoft Corporation in America. In the following description, the image processing program 324a according to this embodiment operates on the above operating system.

The I/O interface 321f is composed of, for example, a serial interface such as USB, IEEE1394 or RS-232C, a parallel interface such as SCSI, IDE or IEEE1284, and an analog interface including a D/A converter, an A/D converter and the like. The input section 323 is composed of a keyboard and a mouse and is connected to the I/O interface 321f, and the user uses the input section 323 to input data to the computer 320. In addition, the CCD camera 313 provided on the microscope unit 3a is connected to the I/O interface 321f, so that the images obtained by the CCD camera 313 can be captured.

The communication interfaces 321 g and 321 h are Ethernet (registered trade name) interfaces. The communication interface 321 g is connected to the blood cell image display unit 3c via a LAN. The computer 320 can perform transmission and reception of data with the blood cell image display unit 3c, which is connected to the LAN by using a predetermined communication protocol, and a host computer 7 by the communication interface 321 g. In addition, the communication interface 321 h is connected to the communication interface 317 of the microscope unit 3a via a communication cable so as to perform data communication therewith.

The communication interface 321 i is connected to the communication interface 318 of the microscope unit 3a via a communication cable to perform data communication therewith. Accordingly, images captured by the CCD camera 313 are received by the communication interface 321 i.

The image output interface 321 j is connected to the image display section 322 composed of an LCD, a CRT or the like to output a picture signal corresponding to the image data provided from the CPU 321 a to the image display section 322. The image display section 322 displays an image (screen) in accordance with an input picture signal.

### <Configuration of Blood Cell Image Display Unit 3c>

The blood cell image display unit 3c is configured from a computer. The blood cell image display unit 3c is connected to the image processing unit 3b via a LAN to read and display blood cell images in the blood cell image folder 325 provided in the hard disk 321d of the image processing unit 3b.

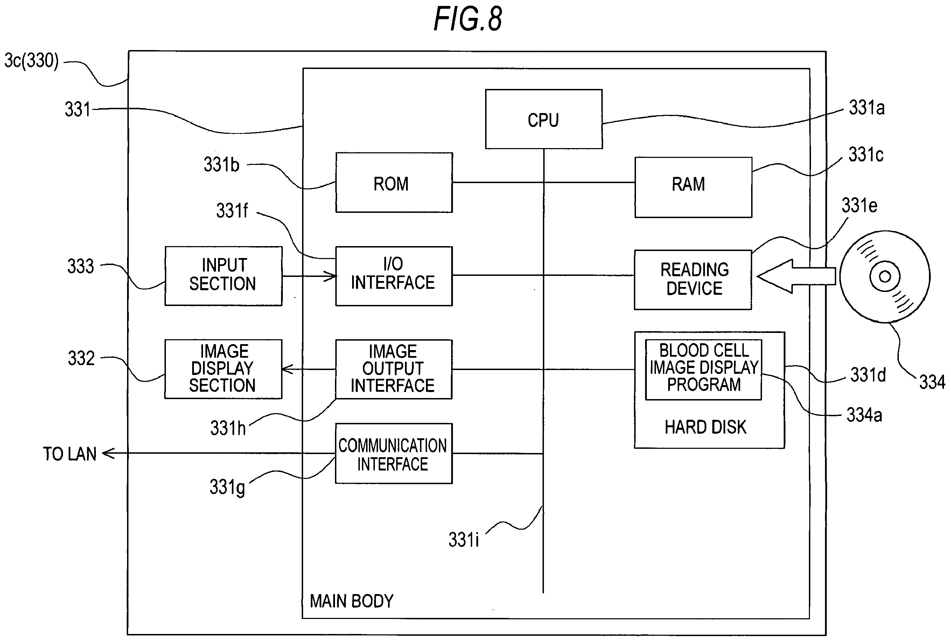

Fig. 8 is a block diagram showing the configuration of a blood cell image display unit 3c. The blood cell image display unit 3c is realized by a computer 330. As shown in Fig. 8, the computer 330 includes a main body 331, an image display section 332 and an input section 333. The main body 331 includes a CPU 331 a, a ROM 331 b, a RAM 331 c, a hard disk 331 d, a reading device 331e, an I/O interface 331f, a communication interface 331g and an image output interface 331 h. The CPU 331 a, the ROM 331 b, the RAM 331 c, the hard disk 331 d, the reading device 331 e, the I/O interface 331 f, the communication interface 331g, and the image output interface 331h are connected to one another by a bus 331 i.

In the hard disk 331d, various computer programs for execution by the CPU 331 a, such as an operating system and an application program, and data which are used to execute the computer programs are installed. A blood cell image display program 334a to be described later is also installed in the hard disk 331d.

The reading device 331e is composed of a flexible disk drive, a CD-ROM drive, a DVD-ROM drive or the like and can read the computer program or data recorded in a portable recording medium 334. In the portable recording medium 334, the blood cell image display program 334a is stored which prompts the computer to function as the blood cell image display unit 3c. The computer 330 can read the blood cell image display program 334a from the portable recording medium 334 and install the blood cell image display program 334a in the hard disk 331d.

The I/O interface 331f is composed of, for example, a serial interface such as USB, IEEE1394, SAS, SATA or RS-232C, a parallel interface such as SCSI, IDE or IEEE1284, and an analog interface including a D/A converter, an A/D converter and the like. The input section 333 composed of a keyboard and a mouse is connected to the I/O interface 331f and the user can use the input section 333 to input data to the computer 330.

The communication interface 331g is an Ethernet (registered trade name) interface. The communication interface 331g is connected to the image processing unit 3b via a LAN. Via the communication interface 331 g, the computer 330 can perform transmission and reception of data with the image processing unit 3b connected to the LAN by using a predetermined communication protocol.

Since the other configurations of the blood cell image display unit 3c are the same as the configurations of the above-described image processing unit 3b, the description thereof will be omitted.

### <Configuration of Blood Cell Analyzing Apparatus>

The blood cell analyzing apparatus 4 as an optical flow cytometry type multiple blood cell analyzing apparatus obtains the side-scattered light intensity, the fluorescent intensity and the like of blood cells included in a blood specimen, classifies the blood cells included in the specimen on the basis of the above intensities, and counts the number of blood cells for each type. Moreover, the blood cell analyzing apparatus 4 creates a scattergram in which the classified blood cells are color-coded for each type, and displays the scattergram. The blood cell analyzing apparatus 4 includes a measuring unit 41 for measuring a blood specimen and an information processing unit 42 for processing measuring data output from the measuring unit 41 and displaying an analysis result of the blood specimen.

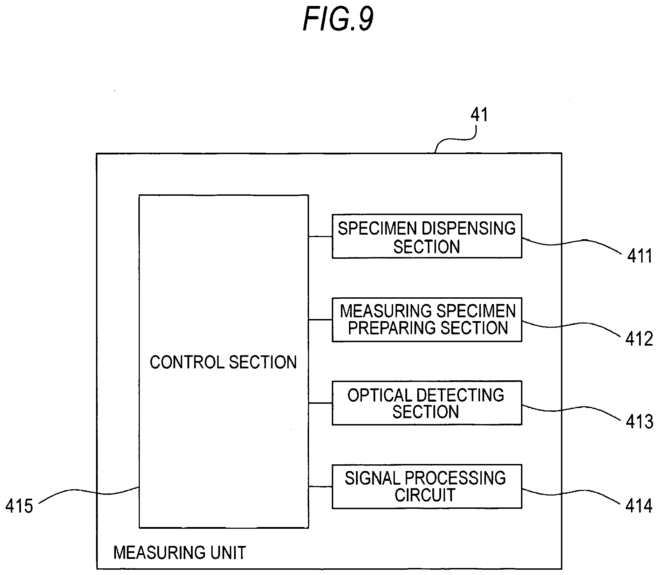

Fig. 9 is a block diagram showing the schematic configuration of the measuring unit 41. The measuring unit 41 includes a specimen dispensing section 411, a measuring specimen preparing section 412, an optical detecting section 413, a signal processing circuit 414 and a control section 415.

The specimen dispensing section 411 includes an aspiration tube (not shown) and the aspiration tube is stuck into the cap section 151 a of the test tube 151 in the specimen rack 150 which is transported on a measuring line of the specimen transport apparatus 5 to aspirate a blood specimen from the test tube 151. The measuring specimen preparing section 412 includes a mixing container (not shown) to mix and stir the blood specimen dispensed by the specimen dispensing section 411, a reagent and a diluent and prepare a measuring specimen.

The optical detecting section 413 includes a flow cell (not shown) to form a narrow flow of the measuring specimen by supplying the measuring specimen to the flow cell and exposes the measuring specimen to light to obtain a side-scattered light signal, a forward-scattered light signal and a fluorescent signal by an optical sensor. These signals are output to the signal processing circuit 414. The signal processing circuit 414 processes an electric signal output from the optical detecting section 413. The signal processing circuit 414 obtains parameters such as peaks and pulse widths of the side-scattered light signal, the forward-scattered light signal and the fluorescent signal.

The control section 415 includes a CPU and a memory, and is connected to the specimen transport apparatus 5 so as to perform data communication therewith. The control section 415 controls the specimen dispensing section 411, the measuring specimen preparing section 412, the optical detecting section 413 and the signal processing circuit 414 in accordance with an analysis item provided from the specimen transport apparatus 5, and performs a measurement operation corresponding to the analysis item. In addition, the control section is configured to transmit measuring data including the parameters obtained by the signal processing circuit 414 to the information processing unit 42.

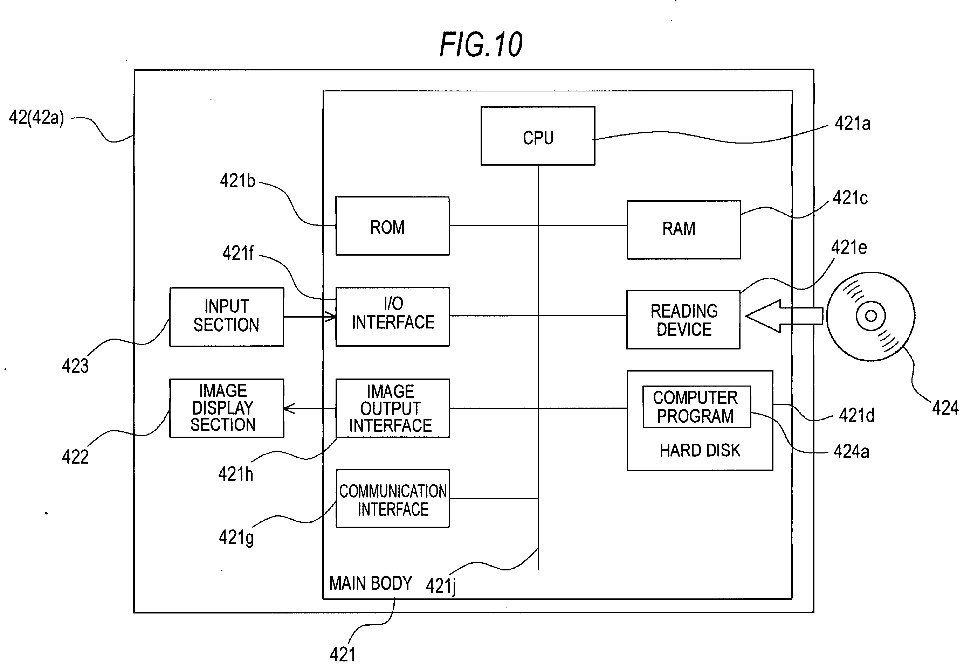

Next, the configuration of the information processing unit 42 will be described. The information processing unit 42 is composed of a computer. Fig. 10 is a block diagram showing the configuration of the information processing unit 42. The information processing unit 42 is realized by a computer 42a. As shown in Fig. 10, the computer 42a includes a main body 421, an image display section 422 and an input section 423. The main body 421 includes a CPU 421a, a ROM 421b, a RAM 421c, a hard disk 421d, a reading device 421e, an I/O interface 421f, a communication interface 421g and an image output interface 421 h. The CPU 421 a, ROM 421 b, RAM 421 c, hard disk 421 d, reading device 421 e, I/O interface 421 f, communication interface 421 g and image output interface 421 h are connected to each other by a bus 421j.

In the hard disk 421d, various computer programs for execution by the CPU 421a, such as an operating system and an application program, and data which are used to execute the computer programs are installed. In addition, an analyzing program 424a which analyzes the measurement data output from the measuring unit 41 to obtain an analysis result of the specimen is also installed in the hard disk 421d.

The communication interface 421g is an Ethernet (registered trade name) interface. The communication interface 421g is connected to the measuring unit 41 via a LAN. The computer 42a can perform transmission and reception of data with the measuring unit 41, which is connected to the LAN using a predetermined communication protocol, by the communication interface 421 g. In addition, the communication interface 421 g is connected to the host computer 7 via the LAN so as to perform data communication therewith.

Since the other configurations of the information processing unit 42 are the same as the configurations of the above-described image processing unit 3b, the description thereof will be omitted.

### [Operation of Specimen Processing System 1]

Next, the operation of the specimen processing system 1 according to this embodiment will be described.

### <Operation of Blood Cell Analyzing Apparatus 4>

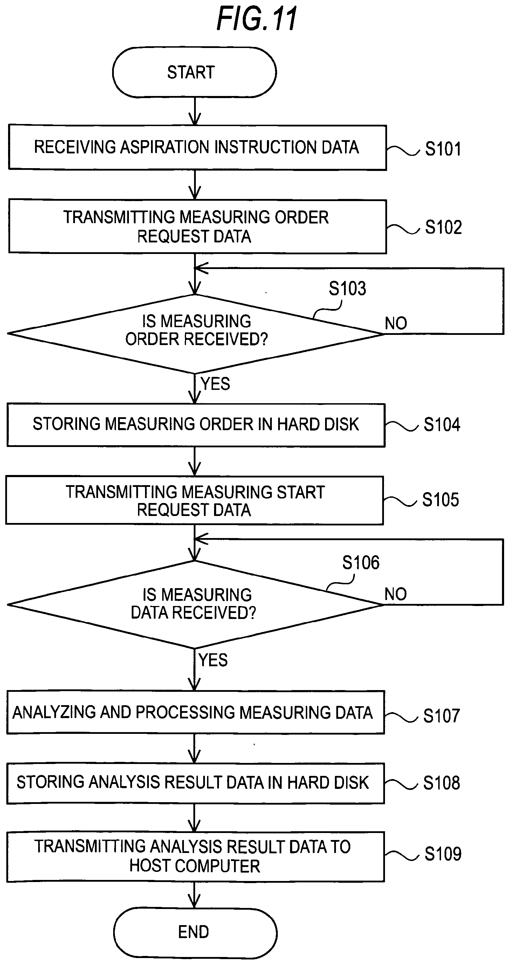

First, the operation of the blood cell analyzing apparatus 4 will be described. Fig. 11 is a flowchart showing the flow of an operation of the information processing unit 42 of the blood cell analyzing apparatus 4. The specimen rack 150 accommodating the specimen which is an analyzing target of the blood cell analyzing apparatus 4 is transported to the front of the blood cell analyzing apparatus 4 by the specimen transport apparatus 5. At this time, the specimen transport apparatus 5 transmits aspiration instruction data indicating an aspiration instruction of the specimen as the analyzing target to the blood cell analyzing apparatus 4. Aspiration instruction data transmitted from the specimen transport apparatus 5 is received by the communication interface 421 g of the information processing unit 42 via the control section 415 of the measuring unit 41 (Step S101). The analysis program 424a which is executed by the CPU 421 a of the information processing unit 42 is an event-driven program, and in the CPU 421a, a process of Step S102 is invoked when an event occurs in which the aspiration instruction data is received.

In Step S102, the CPU 421 a transmits order request data including the specimen ID included in the aspiration instruction data to the host computer 7 via the communication interface 421 g (Step S102) to inquire about a measuring order from the host computer 7. Then, the CPU 421a stands by to receive the measuring order (No in Step S103). When the measuring order transmitted from the host computer 7 is received by the communication interface 421 g of the information processing unit 42 (Yes in Step S103), the CPU stores the received measuring order in the hard disk 421d (Step S104).

Next, the CPU 421 a transmits measurement start request data including the analysis item included in the stored measuring order to the measuring unit 41 (Step S105). The control section 415 of the measuring unit 41 receives the measurement start request data, and thus the blood specimen is measured with respect to the analysis item included in the measurement start request data. After the measurement, the control section 415 of the measuring unit 41 transmits the measuring data (raw data) reflecting the side-scattered light intensity and the fluorescent intensity obtained by the measurement to the information processing unit 42. The CPU 421 a stands by to receive the measuring data (No in Step S106). When the measuring data is received by the communication interface 421 g (Yes in Step S106), the CPU performs a process to analyze the measuring data (Step S107), classifies the blood cells included in the specimen and counts the number of blood cells for each type to create a scattergram in which the classified blood cells in this way are color-coded for each type. In the measuring data analyzing process, abnormalities, such as an abnormality of a white blood cell scattergram (scattergram for classifying white blood cells for each type), an abnormality of an NRBC scattergram (scattergram for detecting a nucleated red blood cell), a neutropenia abnormality indicating that the number of neutrophils falls below a predetermined normal range, a neutrophilia abnormality indicating that the number of neutrophils is more than the normal range, a monocytosis abnormality indicating that the number of monocytes is more than a predetermined normal range, an eosinophilia abnormality indicating that the number of eosinophils is more than a predetermined normal range, a basophilic leukocytosis abnormality indicating that the number of basophils is more than a predetermined normal range, a leucopenia abnormality indicating that the total number of white blood cells falls below a predetermined normal range, a leukocytosis abnormality indicating that the total number of white blood cells is more than a predetermined normal range, and an erythroblastosis abnormality indicating that the number of erythroblasts is more than a predetermined normal range, are detected, and an abnormality flag indicating that an abnormality is detected is added to the analysis result data generated by the analyzing process. The analysis result data generated by the measuring data analyzing process is stored together with the patient information and the like included in the measuring order in the hard disk 421 d (Step S108) and is transmitted to the host computer 7 (Step S109). The host computer 7 integrates the analysis result data and the above-described measuring order and stores the result thereof in the hard disk. After the process of Step S109, the CPU 421a completes the process.

### <Blood Cell Image Registration Operation>

Next, a blood cell image registration operation will be described in which the smear slide preparing apparatus 2 prepares a blood smear slide, and the specimen imaging apparatus 3 images a blood cell in the blood smear slide, and the blood cell image is stored. As described above, the specimen rack 150 accommodating the specimen which is supplied to the blood cell analyzing apparatus 4 for analysis is transported to the smear slide preparing apparatus 2 by the specimen transport apparatus 5. The smear slide preparing apparatus 2 aspirates the specimen accommodated in the test tube 151 which is transported as described above, and drops and spreads the specimen on the slide glass 100. By dipping the slide glass 100 in a stain solution, the blood smear slide is prepared. Further, the stain which is implemented on the specimen by the smear slide preparing apparatus 2 includes May Grunwald Giemsa stain (May Giemsa stain), Wright Giemsa stain, or Wright stain. The specimen rack 150 accommodating the test tube 151 in which the specimen is aspirated by the smear slide preparing apparatus 2 is transported to the downstream by the specimen transport apparatus 5. The test tube 151 is held in a cool box by a user.

The blood smear slide (slide glass 100) prepared as described above is automatically supplied to the microscope unit 3a from the smear slide preparing apparatus 2 by the specimen transport apparatus 6.

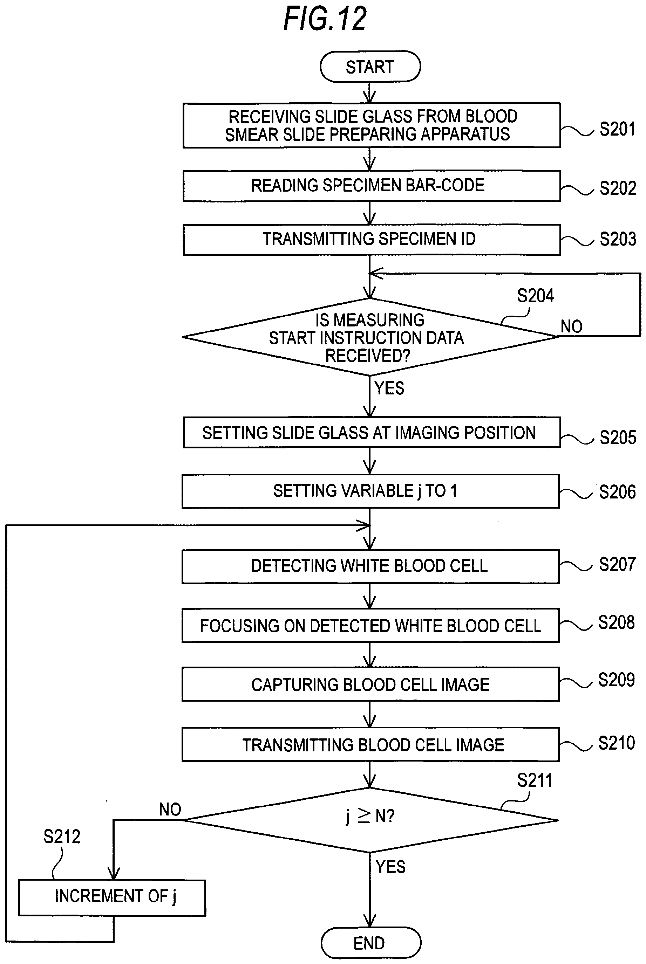

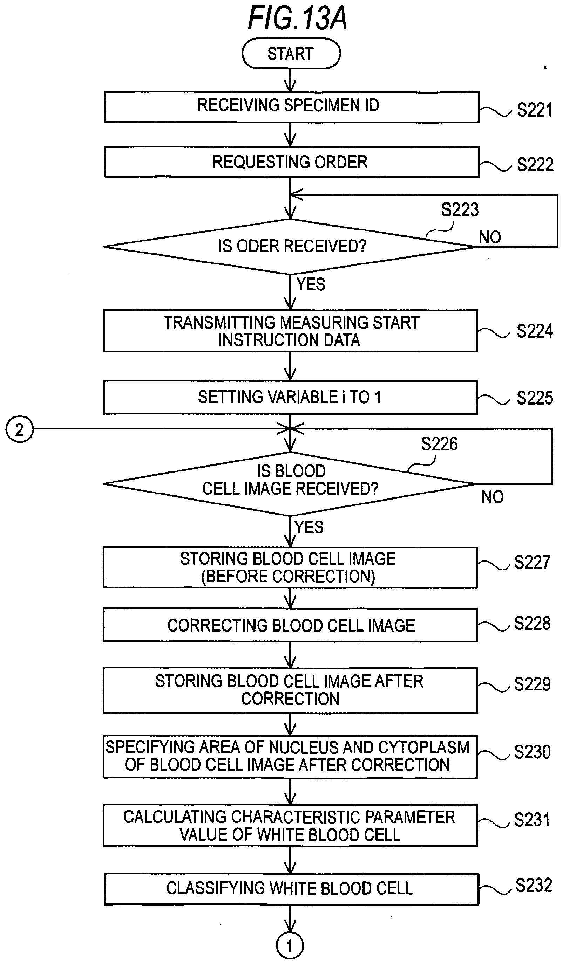

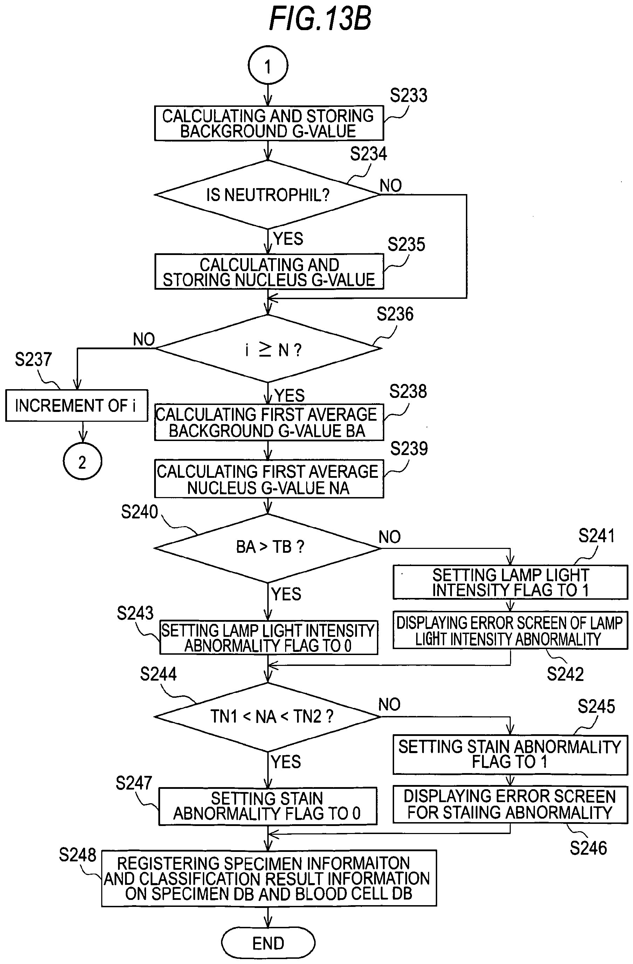

Fig. 12 is a flowchart showing the procedure of an operation of the microscope unit 3a in the blood cell image registration operation, and Fig. 13A and 13B are flowcharts showing the operation sequence of the image processing unit 3b in the blood cell image registration operation. When receiving the slide glass 100 from the specimen transport apparatus 6, the microscope unit 3a detects the slide glass via a sensor (not shown) (Step S201). A control program which is executed by the control section 316 is an event-driven program. Then, in the control section 316 of the microscope unit 3a, a process of Step S202 is invoked when an event occurs in which the slide glass 100 is received from the specimen transport apparatus 6.

In Step S202, the control section 316 transports the slide cassette 35 accommodating the received slide glass 100 to a predetermined bar-code reading position and the specimen bar-code is read by the two-dimensional bar-code reader 319 (Step S202). Next, the control section 316 transmits the specimen ID obtained in Step S202 to the image processing unit 3b via the communication interface 317 (Step S203).

The specimen ID transmitted from the microscope unit 3a is received by the communication interface 321 h of the image processing unit 3b (Step S221 of Fig. 13A). The image processing program 324a which is executed by the CPU 321a of the image processing unit 3b is an event-driven program, and in the CPU 321 a, a process of Step S222 is invoked when an event occurs in which the specimen ID is received.

In Step S222, the CPU 321 a transmits order request data including the received specimen ID to the host computer via the communication interface 321 g (Step S222). The order transmitted from the host computer includes the specimen ID, the patient's name, the patient's sex, hospital ward information, comments, analysis results of the blood cell analyzing apparatus 4 (numerical data such as the number of white blood cells and the number of red blood cells), various pieces of abnormality information detected by the blood cell analyzing apparatus 4 (white blood cell scattergram abnormality flag, NRBC scattergram abnormality flag, neutropenia abnormality flag, neutrophilia abnormality flag, monocytosis abnormality flag, eosinophilia abnormality flag, basophilic abnormality flag, leucopenia abnormality flag, leukocytosis abnormality flag, erythroblastic abnormality flag, etc.), and the data of the number N of white blood cells counted. The CPU 321a stands by to receive the order (No in Step S223). When the order is received (Yes in Step S223), the CPU 321 a transmits measurement start instruction data including the count number N of white blood cells which is included in the order, to the microscope unit 3a (Step S224) by the communication interface 321 h, and sets the variable i indicating the number of the analyzed blood cell images to 1 (Step S225).

Herein, the microscope unit 3a stands by to receive the measurement start instruction data (No in Step S204 of Fig. 12). When the measurement start instruction data transmitted from the image processing unit 3b is received by the communication interface 317 of the microscope unit 3a (Yes in Step S204), the control section 316 transports the slide cassette 35 to a predetermined position to hold the slide glass 100 which has been stopped at the predetermined position by the chuck section 37. Then, the slide glass is drawn from the slide cassette 35 by retracting the chuck section 37. Then, the slide glass 100 is set at a predetermined position (imagine position) in the XY stage 31 (Step S205). In addition, the control section 316 sets a variable j indicating the number of imaging operations to 1 (Step S206).

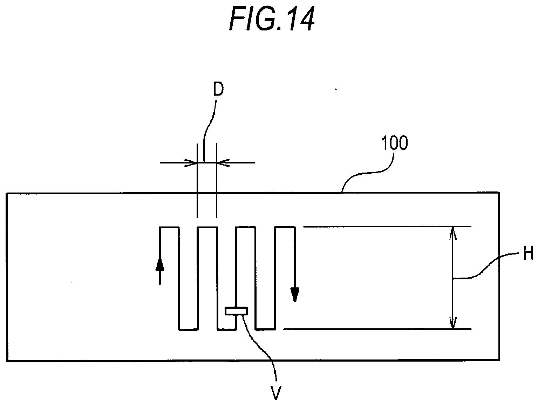

Next, the white blood cells in the blood applied to the slide glass 100 are detected (Step S207). The detection is carried out using the sensor 312. The sensor 312 is a line sensor and has a field of view of about 400 µm. Fig. 14 is a diagram explaining a scanning pattern of the specimen on the slide glass in the white blood cell detection. The control section 316 moves the XY stage 31 in the X and Y directions so that the sensor 312 performs a scan operation on the slide glass 100 in a substantially zigzag manner from one end toward the other end in the longitudinal direction (see Fig. 14 for reference). Generally, an interval D in the longitudinal direction of the slide glass 100 of the substantial zigzag scanning is set in the range of about 300 to 500 µm from the viewpoint of preventing detection failures and increasing scanning efficiency. A dimension H in the width direction of the slide glass 100 being scanned is set in the range of about 14 to 18 mm because the width of the slide glass 100 is normally about 26 mm.

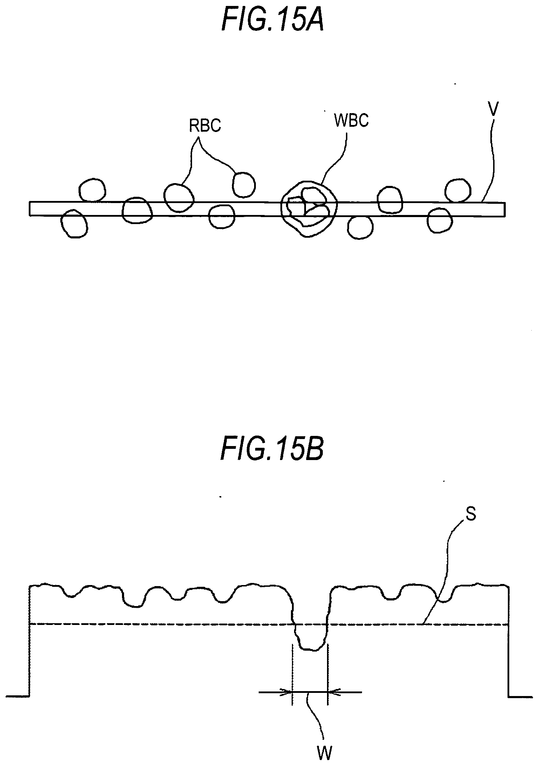

Red blood cells do not absorb much of the red color component of light, but the nucleus of a white blood cell does absorb a large amount of the red color component of light. Accordingly, by detecting the red color component, the white blood cells and the red blood cells can be easily distinguished. Fig. 15A is a diagram explaining the field of view of the line sensor 312, and Fig. 15B is a diagram showing a signal waveform of the line sensor 312. Fig. 15A shows that a white blood cell WBC is present in a field of view V of the line sensor 312. In this case, as shown in Fig. 15B, the red color component of a signal detected by the line sensor 312 has a value equal to or less than a reference value S in a part in which the white blood cell WBC is present. Using this phenomenon, the white blood cells can be detected in the blood. By detecting the width W of the portion in which the red color component of the signal has a value equal to or less than the reference value S, it is checked whether the portion emitting the signal is the nucleus of the white blood cell.

Next, the control section 316 performs an auto-focus operation (Step S208). As shown in Fig. 5, the direction of the light passing through the slide glass 100 and the objective lens 32 is changed by a prism mirror 39a, and the light is divided into light which is directed to the CCD camera 313 and light which is directed to the sensors 311 and 312 by the half mirrors 39. The line sensor 311 for auto-focusing is composed of two line sensors 311 a and 311 b.

The line sensor 311a which is one of the two line sensors 311a and 311b for auto-focusing is disposed in front of (close to the objective lens on the optical path) a focus position (a position which is in focus), and the other line sensor 311 b is disposed behind (far from the objective lens on the optical path) the focus position. In addition, the position of the objective lens is adjusted on the basis of a value which is obtained by the integral of the difference between the output signals of the two line sensors, so that the focus of the objective lens is on the specimen on the slide glass.

Next, the control section 316 instructs the communication interface 318 to capture and transmit the image of the CCD camera 313. Thus, the image of the white blood cell detected in Step S207 is captured (Step S209) and the blood cell image is transmitted to the image processing unit 3b (Step S210). After that, the control section 316 determines whether the required counted number of the white blood cells has been satisfied, that is, whether j is equal to or greater than N (Step S211). When j is less than N (No in Step S211), the control section increments j by 1 (Step S212) and returns the process to Step S207 to repeat the detection of the white blood cells. On the other hand, when j is equal to or greater than N in Step S211 (Yes in Step S211), the control section 316 completes the process.

After Step S225 described above, the CPU 321 a stands by to receive the blood cell image (NO in Step S226 of Fig. 13A). When the blood cell image transmitted from the microscope unit 3a is received by the communication interface 321 h of the image processing unit 3b (YES in Step S226), the CPU 321 a stores the received blood cell image to the hard disk 321 d (Step S227). In Step S227, the white blood cell ID corresponding to the received blood cell image is generated, and the blood cell image is stored as the image data with a file name including the white blood cell ID. Next, the CPU 321a carries out a blood cell image correcting process (Step S228). In this correction process, brightness values of the RGB components of all pixels of the blood cell image is linearly corrected such that the average value of the brightness values of the background portion (corresponding to a portion other than the blood cell image) of the blood cell image becomes a predetermined value (for example, 225). The blood cell image as corrected above is stored in the hard disk 321 d in addition to the uncorrected blood cell images (Step S229). Also the corrected blood cell image is named with a file name (which is different from the file name of the uncorrected blood cell image) including the white blood cell ID.

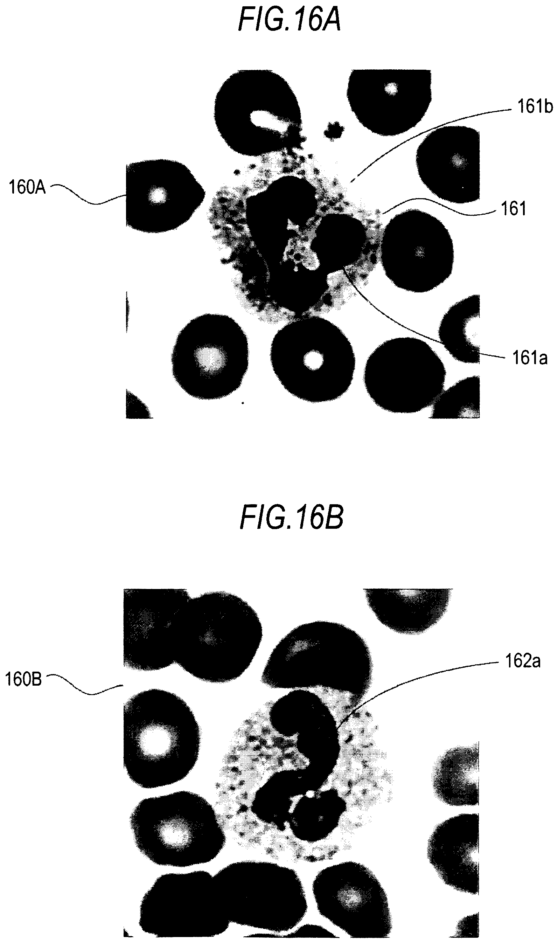

Next, the CPU 321 a specifies areas of cytoplasm and a nucleus in the corrected blood cell image (Step S230). Fig. 16A is a diagram showing an example of the corrected blood cell image. As shown in Fig. 16A, a white blood cell image 161 is included in a corrected blood cell image 160A. In a stained white blood cell, a nucleus has a color different from that of a cytoplasm. Moreover, the colors of the cytoplasm and the nucleus of the white blood cell are different from the colors of a red blood cell and a background. Accordingly, in the process of Step S230, a nucleus area 161 a and a cytoplasm area 161 b which are included in the white blood cell image 161 are specified by using a RGB value of the white blood cell image 161.

Next, the CPU 321 a calculates various characteristic parameters of the white blood cell on the basis of the corrected blood cell image (Step S231). The characteristic parameters include the area, the number of nuclei, irregularity, the tone and concentration (unevenness) of a white blood cell's nucleus, the area, tone and concentration (unevenness) of a white blood cell's cytoplasm, and the area ratio and the concentration ratio between the nucleus and the cytoplasm, which can be obtained on the basis of color signals (G, B, R) of the image.

Next, using the obtained characteristic parameters, the CPU 321 a identifies the type of the white blood cell (Step S232). Specifically, for example, the CPU 321a sequentially compares several characteristic parameters of the white blood cell with judgment criteria values which are determined for various parameter values in advance so as to gradually narrow down the type of the white blood cell. In this manner, the imaged white blood cell is classified as a mature white blood cell such as a lymphocyte, a monocyte, an eosinophil, a basophil or a neutrophil (bacillary, lobulated), as an immature white blood cell such as a blast cell, a young granulocyte or an atypical lymphocyte, or as an erythroblast.

As described above, the specimen imaging apparatus 3 according to this embodiment carries out the white blood cell classification using color information of the blood cell image. Here, when a stained state of the blood smear slide is changed, for example, when the stain solution of the smear slide preparing apparatus 2 is degraded, the color of the white blood cell image is changed. In addition, when an imaging state is changed, for example, when the lamp light intensity of the microscope unit 3a is decreased, the color of the uncorrected blood cell image is changed totally. Therefore, when the stained state of the blood smear slide and the state of the imaging unit of the microscope unit 3a are changed, it is difficult to carry out the blood cell classification with high accuracy, so that the reliability of the classification result of the specimen imaging apparatus 3 is degraded.

The description will be made with reference to the drawing. Fig. 16A is a diagram showing an example of the corrected blood cell image in a case where a normal stain is carried out. Fig. 16B is a diagram showing an example of the corrected blood cell image in a case where the stain solution is degraded. When the May Giemsa stain, the Wright Giemsa stain, and the Wright stain are implemented, the color of the nucleus area is especially different from each other in the blood cell image 160A in a case where the normal stain is carried out and in a blood cell image 160B in a case where the stain solution is degraded. The color of the nucleus area 162a of the blood cell image 160B in a case where the stain solution is degraded is lighter than the color of the nucleus area 161 a of the blood cell image 160A in a case where the normal stain is carried out. In addition, even though there is no graphical representation in Figs. 16A and 16B, by excessively being stained, the color of the nucleus area is darker than the color of the nucleus area in a case of the normal stain. As a result, normal classification is not carried out. Therefore, a brightness value of a specific color component (a green component in this embodiment) of the nucleus area 161 a expresses the characteristic of the nucleus area 161 a of the blood cell image, and expresses the characteristic of the stained state of the blood cell.

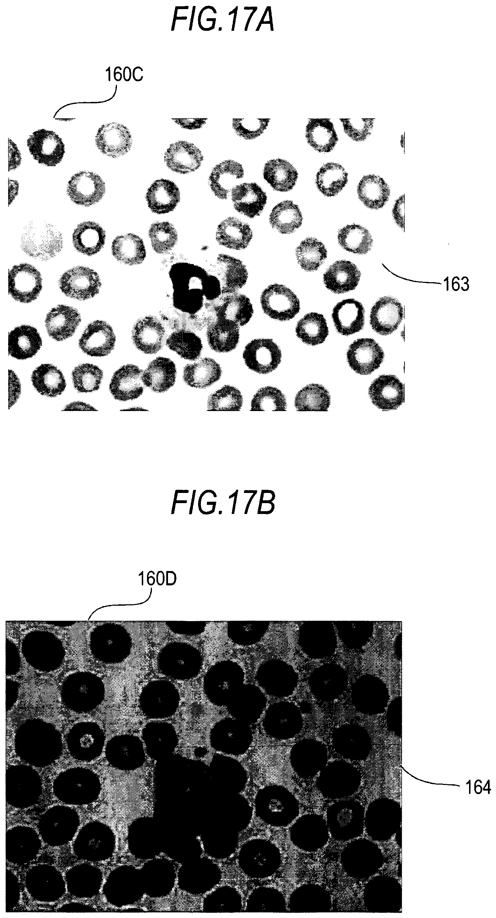

Fig. 17A is a diagram showing an example of the uncorrected blood cell image which is obtained by the imaging under the normal lamp light intensity. Fig. 17B is a diagram showing an example of the uncorrected blood cell image which is obtained by the imaging under low lamp light intensity. An uncorrected blood cell image 160C in the normal lamp light intensity and an uncorrected blood cell image 160D in a case where the lamp light intensity is decreased are specifically different in the brightness of the background area. The background area is not affected by the stain, but by the lamp light intensity. A background area 163 of the blood cell image 160D in a case where the lamp light intensity is decreased has low brightness compared with that of a background area 164 of the blood cell image 160C in a case where the lamp light intensity is normal. As a result, the brightness value of the specified color component (a green component in this embodiment) of the background area of the uncorrected blood cell image expresses the characteristic of the background area of the blood cell image, and also the characteristic of the state of the imaging unit which includes the lamp 38 of the microscope unit 3a and the CCD camera 313.

In this embodiment, in order to provide information to a user to confirm the stain state and the state of the imaging unit as described above, the image processing unit 3b performs the following process. First, the CPU 321 a obtains the G value (brightness value of the green component) of each pixel in the background area in the uncorrected blood cell image, that is, the area other than the blood cell area among the uncorrected blood cell images, calculates an average value of the obtained G values, and stores the obtained value (hereinafter, referred to as "background G-value") in the RAM 321 c (Step S233).

Next, the CPU 321 a determines whether or not the white blood cell relating to the blood cell image is classified into the neutrophil as a result of Step S232 (Step S234). When the white blood cell is classified into the neutrophil (YES in Step S234), the CPU 321 a obtains the G values of the nucleus pixels in the nucleus area of the white blood cell in the corrected white blood cell image, calculates an average value of the obtained G values, and stores the obtained value (hereinafter, referred to as "nucleus G-value") in the RAM 321 c (Step S235). Thereafter, the CPU 321 a makes the procedure proceed to Step S236.

On the other hand, in Step S234, when the white blood cell relating to the blood cell image is not classified into the neutrophil (NO in Step S234), the CPU 321 a moves the process to Step S236.

In Step S236, the CPU 321 a determines whether the required counted number of the white blood cells has been satisfied, that is, whether i is equal to or greater than N (Step S236). When i is less than N (No in Step S236), the CPU 321 a increments i by 1 (Step S237), returns the process to Step S226, and stands by to receive another blood cell image.

On the other hand, when i is equal to or greater than N in Step S236 (Yes in Step S236), the CPU 321 a calculates a first average background G-value BA which is an average value of the background G-value stored in the RAM 321 c (Step S238). In addition, the CPU 321 a calculates a first average nucleus G-value NA which is an average value of the nucleus G-value stored in the RAM 321 c (Step S239).

Next, the CPU 321 a determines whether or not the first average background G-value BA is greater than a predetermined reference value TB (Step S240). When the first average background G-value BA is equal to or less than the reference value TB (NO in Step S240), the CPU 321a sets the lamp light intensity abnormality flag, which is provided at the RAM 321 c, to 1 (Step S241). The CPU 321 a displays an error screen for notifying the occurrence of the lamp light intensity abnormality on the image display section 322 (Step S242), and moves the process to Step S244.

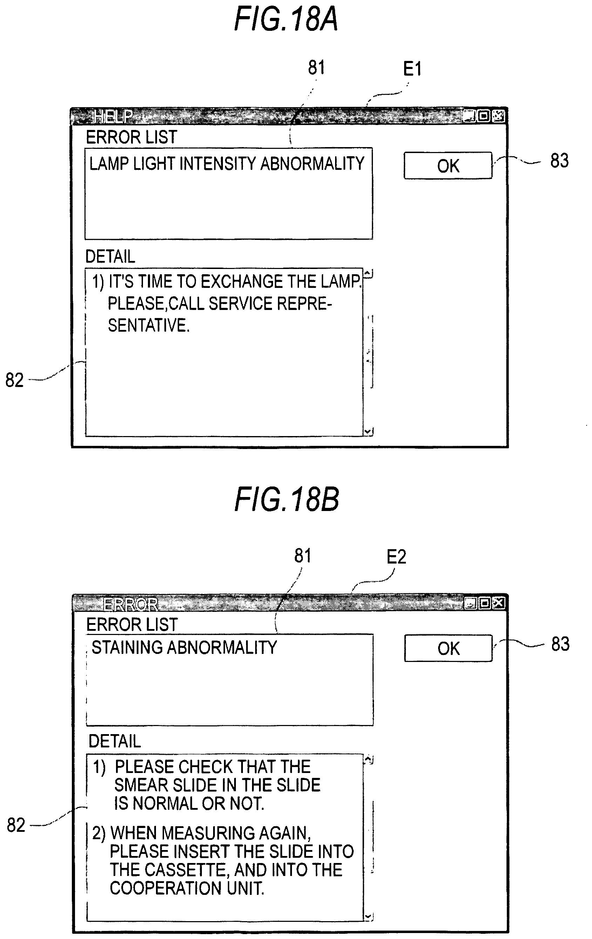

Fig. 18A is a diagram showing an error screen for notifying the occurrence of the lamp light intensity abnormality. When the lamp light intensity abnormality occurs, the error screen E1 as shown in Fig. 18A is displayed. In the error screen E1, an error list display area 81 which displays the error information, a detail information display area 82 which displays the detail information for managing the error, and an OK button 83 which is used to close the screen are included. In the error screen E1 in a case of the lamp light intensity abnormality, "lamp light intensity abnormality" is displayed on the error list display area 81, and a message "1) It's time to replace the lamp. Please call your service representative." is displayed on the detail information area 82.

On the other hand, when the first average background G-value BA is greater than the reference value TB (YES in Step S240), the CPU 321a sets the lamp light intensity abnormality flag to 0 (Step S243), and moves the process to

### Step S244.

In Step S244, the CPU 321 a determines whether or not the first average nucleus G-value NA is greater than a predetermined lower limit reference value TN1 and smaller than a predetermined upper limit reference value TN2 (Step S244). When the first average nucleus G-value NA is equal to or less than the lower limit reference value TN1 or the first average nucleus G-value is equal to or more than the upper limit reference value TN2 (NO in Step S244), the CPU 321 a sets the staining abnormality flag, which is provided at the RAM 321 c, to 1 (Step S245). In addition, the CPU 321 a displays the error screen for notifying the occurrence of the staining abnormality to the image display section 322 (Step S246), and moves the process to Step S248.

Fig. 18B is a diagram showing the error screen for notifying the occurrence of the staining abnormality. When the staining abnormality occurs, the error screen E2 as shown in Fig. 18B is displayed. Similarly to the error screen E1, in the error screen E2, the error list display area 81 which displays the error information, the detail information display area 82 which displays the detail information for managing the error, and the OK button 83 which is used to close the screen are included. In a case of the staining abnormality, "staining abnormality" is displayed on the error list display area 81, and messages "1) Please check whether or not the sample smeared on the slide glass has been correctly stained." and "2) When measuring again, please insert the slide into the cassette, and into the cooperation unit." are displayed on the detail information display area 82.

In the error screens E1 and E2 as described above, a user operates the input section 333 to select the OK button 83, and the display is completed.

On the other hand, when the first average nucleus G-value NA is greater than the lower limit reference value TN1 and smaller than the upper limit reference value TN2 (YES in Step S244), the CPU 321 a sets the staining abnormality flag to 0 (Step S247), and moves the process to Step S248.

In Step S248, the CPU 321 a registers the information relating to the specimen and the classification result as obtained above at the specimen database DB1 and the blood cell database DB2 of the hard disk 321 d (Step S248), and completes the process. In this process, the first average nucleus G-value calculated in Step S239 is stored in the first average nucleus G-value field F18 of the specimen database DB1. The first average background G-value calculated in Step S238 is stored in the first average background G-value field F19 of the specimen database DB1.

### <Blood Cell Image Display Operation>

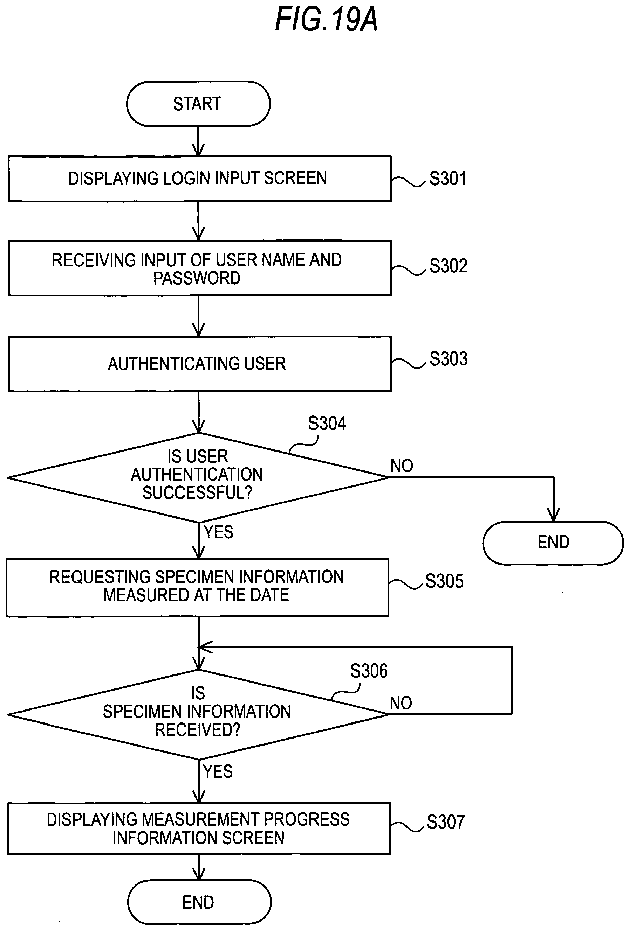

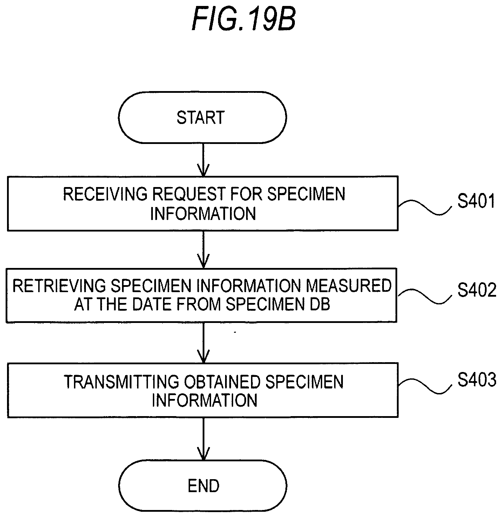

Fig. 19A is a flowchart showing the procedure of an initialization operation of the blood cell image display unit 3c in a blood cell image display operation, and Fig. 19B is a flowchart showing the procedure of a specimen information transmitting operation of the image processing unit 3b in the blood cell image display operation. The user operates the input section 333 of the computer 330 to instruct the execution of the blood cell image display program 334a. The CPU 331a of the computer 330 receives the instruction and executes the blood cell image display program 334a. In this manner, the computer 330 functions as the blood cell image display unit 3c.

Immediately after the initiation of the blood cell image display program 334a, a login input screen is displayed which prompts the input of a user name and a password (Step S301 in Fig. 19A). In the login input screen, the user inputs a user name and a password (Step S302). The blood cell image display program 334a, which is executed by the CPU 331a of the blood cell image display unit 3c, is an event-driven program. Then, in the CPU 331a, a process of Step S303 is invoked when an event occurs in which the user name and the password are input.

In Step S303, the CPU 331 a performs a user authentication process. When the user authentication fails (No in Step S304), the CPU 331 a completes the process. When the user is successfully authenticated by using the login process (Yes in Step S304), the CPU 331a prompts the communication interface 331 g to transmit the requested data of that date's measured specimen information to the image processing unit 3b (Step S305).

The requested data transmitted from the blood cell image display unit 3c is received by the communication interface 321 h of the image processing unit 3b (Step S401 of Fig. 19B). In the CPU 321 a, a process of Step S402 is invoked when an event occurs in which the request data is received.

In Step S402, from the specimen database DB1, the CPU 321 a obtains the specimen information measured at the date (Step S402). Next, the CPU 321a transmits the obtained specimen information to the blood cell image display unit 3c via the communication interface 321g (Step S403) and completes the process.

After transmitting the requested data of the specimen information, the CPU 331 a of the blood cell image display unit 3c stands by to receive the specimen information (No in Step S306 of Fig. 19A). When the specimen information transmitted from the image processing unit 3b is received by the communication interface 331 g of the blood cell image display unit 3c (Yes in Step S306), a measurement progress screen (not shown) is displayed (Step S307), and the process is completed. In the measurement progress screen, the specimen information relating to plural specimens is displayed as a list. In the specimen information list, the areas of "staining abnormality" and "lamp light intensity abnormality" are provided. In the staining abnormality area of the specimen in which the staining abnormality is detected, a mark indicating the occurrence of the staining abnormality is displayed. In the lamp light intensity abnormality area of the specimen in which the lamp light intensity abnormality is detected, a mark indicating the lamp light intensity abnormality is displayed. In the measurement progress screen, the user can select one of the pieces of specimen information displayed as a list. By selecting one piece of specimen information and subsequently performing a predetermined operation (for example, the double-clicking of the left button of a mouse), the user can provide an instruction to display a blood cell image relating to the specimen.

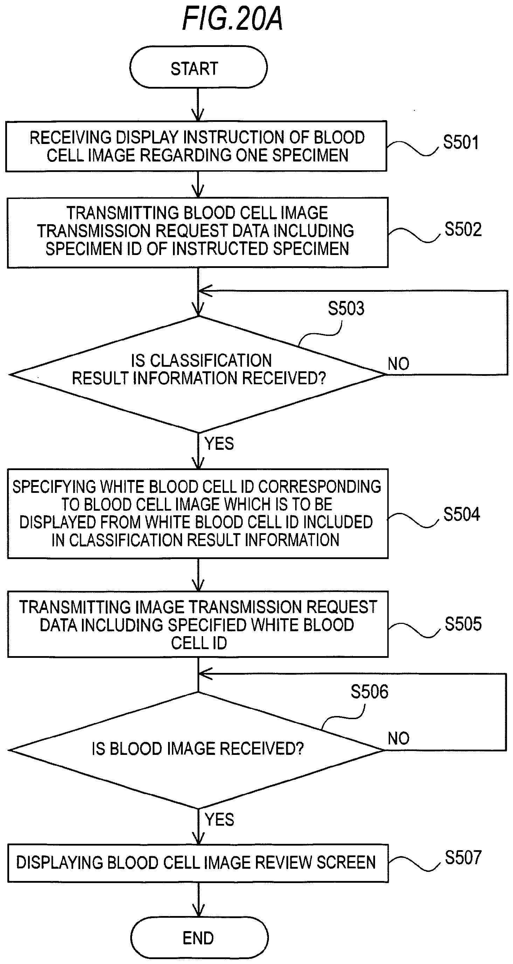

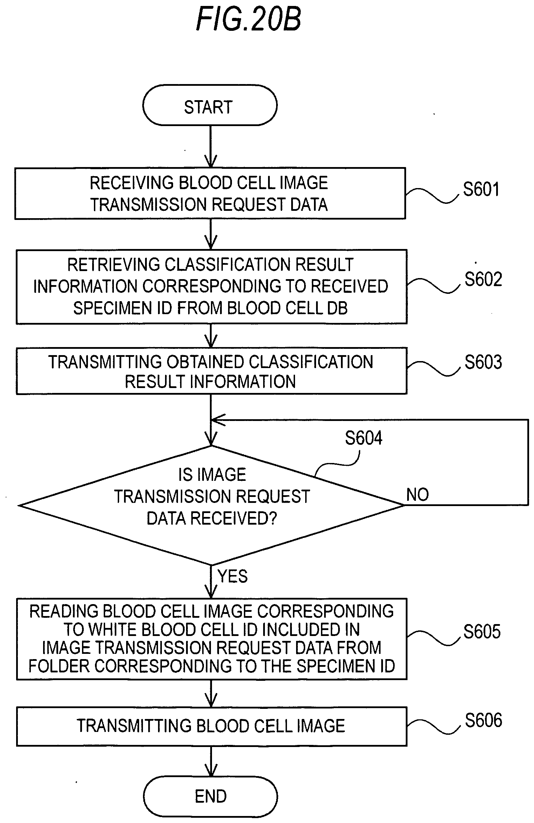

Fig. 20A is a flowchart showing the procedure of an image display operation of the blood cell image display unit 3c in the blood cell image display operation, and Fig. 20B is a flowchart showing the procedure of a blood cell image transmitting operation of the image processing unit 3b in the blood cell image display operation. In the blood cell image display unit 3c, when an event occurs, in which the instruction for displaying the blood cell image relating to one specimen is received as described above, in a state in which the measurement progress screen is displayed (Step S501), a process of Step S502 is invoked.

In Step S502, the CPU 331 a transmits blood cell image transmitting request data, including the specimen ID of the specimen for which the instruction is made, to the image processing unit 3b via the communication interface 331 g (Step S502).

The request data transmitted from the blood cell image display unit 3c is received by the communication interface 321 h of the image processing unit 3b (Step S601 of Fig. 20B). In the CPU 321a, a process of Step S602 is invoked when an event occurs in which the request data is received.

In Step S602, the CPU 321 a obtains classification result information from the blood cell database DB2 corresponding to the specimen ID (Step S602). The classification result information includes white blood cell IDs specifying the white blood cells, the types (monocyte, neutrophil, basophil, eosinophil, lymphocyte, etc.) as the result of the white blood cell classification, and information indicating whether or not the classification can be carried out. In addition, in the classification result information, the type information or the unclassifiable information of the white blood cells is associated with the white blood cell ID. That is, with the classification result information, the types of the white blood cells can be specified or the white blood cell can be specified as being unclassifiable or not from the white blood cell ID.

Next, the CPU 321 a transmits the obtained classification result information to the blood cell image display unit 3c via the communication interface 321 g (Step S603).

After transmitting the request data of the classification result information, the CPU 331 a of the blood cell image display unit 3c stands by to receive the classification result information (No in Step S503 of Fig. 20A). For example, when the classification result information transmitted from the image processing unit 3b is received by the communication interface 331 g of the blood cell image display unit 3c (Yes in Step S503), the white blood cell ID corresponding to the blood cell image to be displayed is specified from the white blood cell ID included in the classification result information according to the display conditions such as only displaying the images of a specific type of white blood cells (Step S504). The image transmitting request data including the specified white blood cell ID is transmitted to the image processing unit 3b via the communication interface 331g (Step S505). Further, in Step S504, one or more white blood cell IDs are specified. All the specified white blood cell IDs are included in the above-described image transmitting request data.

After transmitting the classification result information, the CPU 321a of the image processing unit 3b stands by to receive the image transmitting request data (No in Step S604 of Fig. 20B). When the request data transmitted from the blood cell image display unit 3c is received by the communication interface 321 h of the image processing unit 3b (Yes in Step S604), the CPU 321a reads the blood cell image (corrected blood cell image) corresponding to the white blood cell ID, which is included in the image transmitting request data, from the folder corresponding to the specimen ID in the blood cell image folder 325 of the hard disk 321 d (Step S605). Then, the CPU 321a transmits the read blood cell image to the blood cell image display unit 3c via the communication interface 321 g (Step S606), and completes the process.

The CPU 331 a of the blood cell image display unit 3c transmits the image transmitting request data, and then stands by to receive the blood cell image (NO in Step S506 of Fig. 20A). When the blood cell image transmitted from the image processing unit 3b is received by the communication interface 331g of the blood cell image display unit 3c (YES in Step S506), the CPU 331 a displays the blood cell image review screen (Step S507), and completes the process.

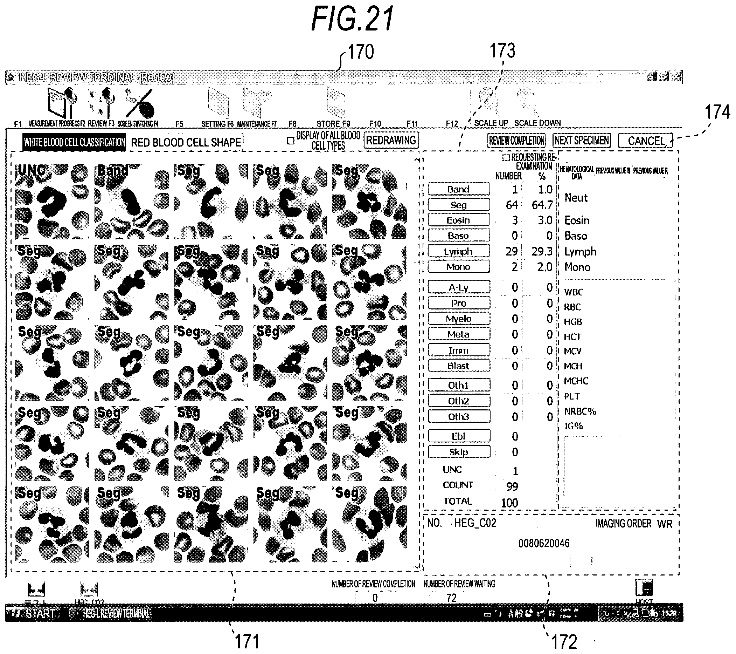

Fig. 21 is a diagram showing an example of the blood cell image review screen. In a blood cell image review screen 170, a blood cell image display area 171 for displaying one or more blood cell images, a patient information display area 172 for displaying patient information, a counted value display area 173 for displaying the result of the counting of each type of classified blood cells, and an analysis result display area 174 for displaying the analysis result of the multiple automatic blood cell analyzing apparatus are included. In the blood cell image display area, images which are obtained by reducing received blood cell images are displayed as a list. A blood cell type is displayed with a string of characters ("MONO" for a monocyte, "SEG" or "BAND" for a neutrophil, "EO" for an eosinophil, "BASO" for a basophil, "LYMP" for a lymphocyte, etc.) in each reduced image.

### <Shutdown Operation of Image Processing Unit 3b>

Next, the shutdown operation of the image processing unit 3b of the specimen imaging apparatus 3 will be described.

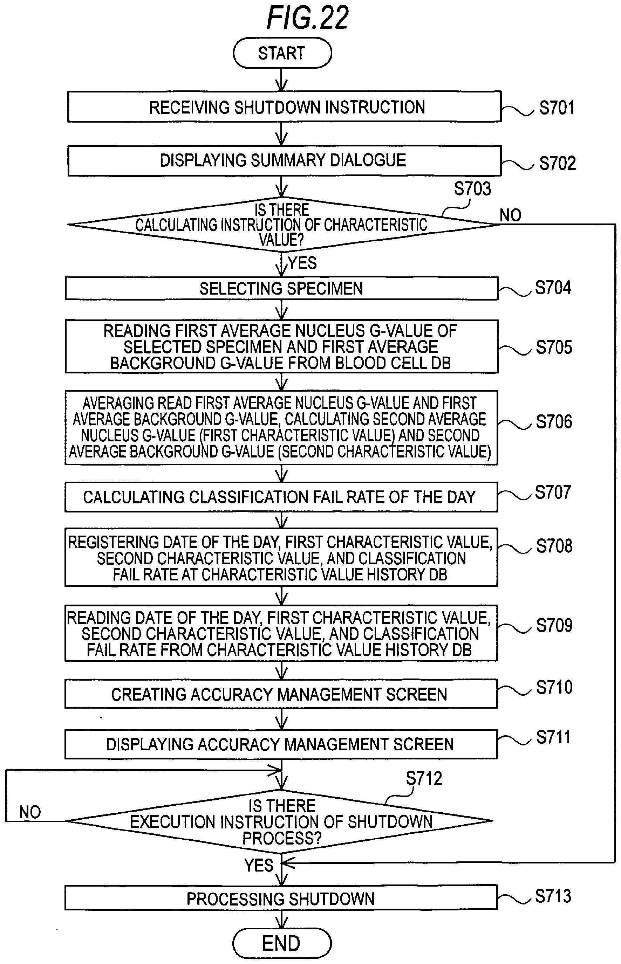

Fig. 22 is a flowchart showing the flow of the shutdown operation of the image processing unit 3b. During the image processing program 324a is performing, an operation screen of the image processing program 324a is displayed on the image display section 322 of the image processing unit 3b. In the operation screen, there is provided a menu with which the shutdown instruction can be issued to the image processing unit 3b. When the operation of the input section 323 is carried out by a user to select the menu, the shutdown instruction is issued to the image processing unit 3b (Step S701). When In the CPU 321 a, a process of Step S702 is invoked when an event occurs in which the shutdown instruction is received.

In Step S702, the CPU 321 a displays a summary dialogue (not shown) in the image display section 322 (Step S702). In the summary dialogue, there are provided a summary button for instructing the image processing unit 3b to calculate the second average nucleus G-value and the second average background G-value which are each obtained by averaging the first average nucleus G-value and the first average background G-value, and a cancel button for performing the shutdown process without calculating the second average nucleus G-value and the second average background G-value. The summary button and the cancel button can be selected by the operation of the input section 323. When the summary button is selected in the summary dialogue (YES in Step S703), the CPU 321 a moves the process to Step S704. When the cancel button is selected (NO in Step S703), the CPU 321 a moves the process to Step S713.

In Step S704, the CPU 321 a refers to the specimen database DB1 and the blood cell database DB2 so as to select the specimen in which the neutrophil is included in the blood cell type and the analysis result by the blood cell analyzing apparatus 4 is normal among the specimens measured at the date (Step S704). Specifically, in the process of Step S704, the specimen is selected in which the date stored in the measurement date field F15 of the specimen database DB1 is the current date, the values of the fields F12, F13, F14, ... for storing various pieces of abnormality information detected by the blood cell analyzing apparatus 4 are "0(Normal)", and the neutrophil ("SEG" or "BAND") is included in the field F22 of the blood cell database DB2.

Next, the CPU 321 a reads out the first average nucleus G-values and the first average background G-values of all the selected specimens from the specimen database DB1 (Step S705). The CPU 321 a takes an average of all the read first average nucleus G-values and calculates the second average nucleus G-value. In addition, the CPU 321a takes an average of all the read first average background G-values and calculates the second average background G-value (Step S706).

In addition, the CPU 321a refers to the specimen database DB1 and the blood cell database DB2 so as to obtain the number of the specimens which cannot be classified among the specimens measured at the date and the classification fail rate which is a rate to the number of all the specimens measured at the date (Step S707). That is, in this process, the number SN of all the specimens of which the date stored in the measurement date field F15 of the specimen database DB1 is the current date, and the number UN of the specimens of which the value of the reconfirmation object field F23 of the blood cell database DB2 among these specimens is "1" are counted, and a percentage (classification fail rate) of the number UN of the specimens to the number SN of all the specimens is calculated.

The CPU 321 a registers the date, the calculated second average nucleus G-value, the calculated second average background G-value, and the classification fail rate at the characteristic value history database DB3 (Step S708).

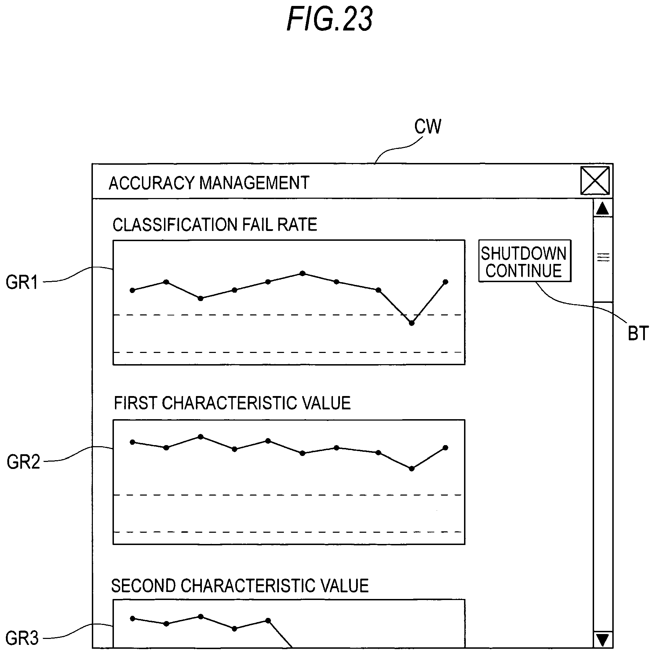

In addition, the CPU 321 a reads the date before the present month, the second average nucleus G-value, the second average background G-value, and the classification fail rate from the characteristic value history database DB3 (Step S709). The CPU 321 a prepares an accuracy management screen (Step S710), and displays the accuracy management screen on the image display section 322 (Step S711). Fig. 23 is a diagram showing an example of the accuracy management screen. In the accuracy management screen CW, there are included a first graph GR1 showing temporal fluctuation in classification fail rate, a second graph GR2 showing temporal fluctuation in the second average nucleus G-value, that is, the first characteristic value, and a third graph GR3 showing temporal fluctuation in the second average background G-value, that is, the second characteristic value. In addition, in the accuracy management screen CW, a shutdown continuation button BT for instructing a shutdown process which is performed as described later.

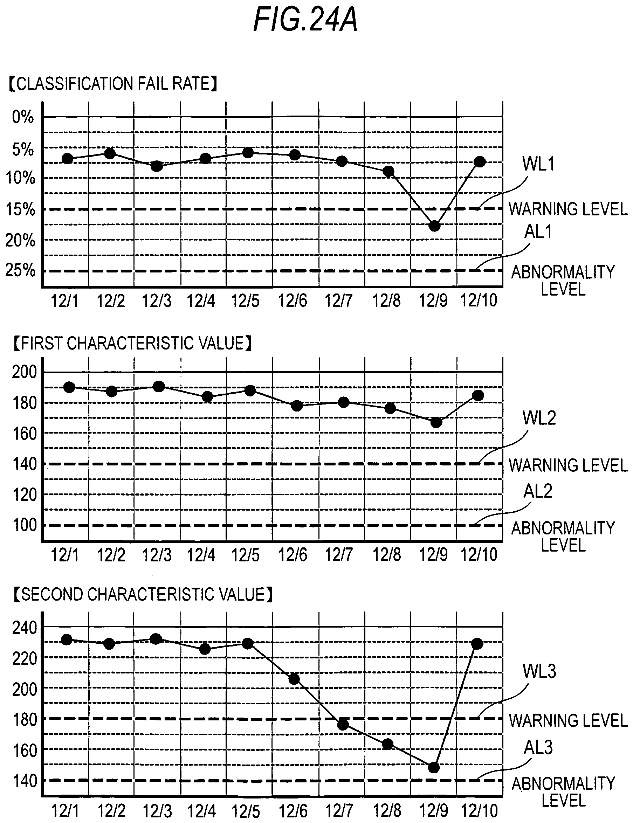

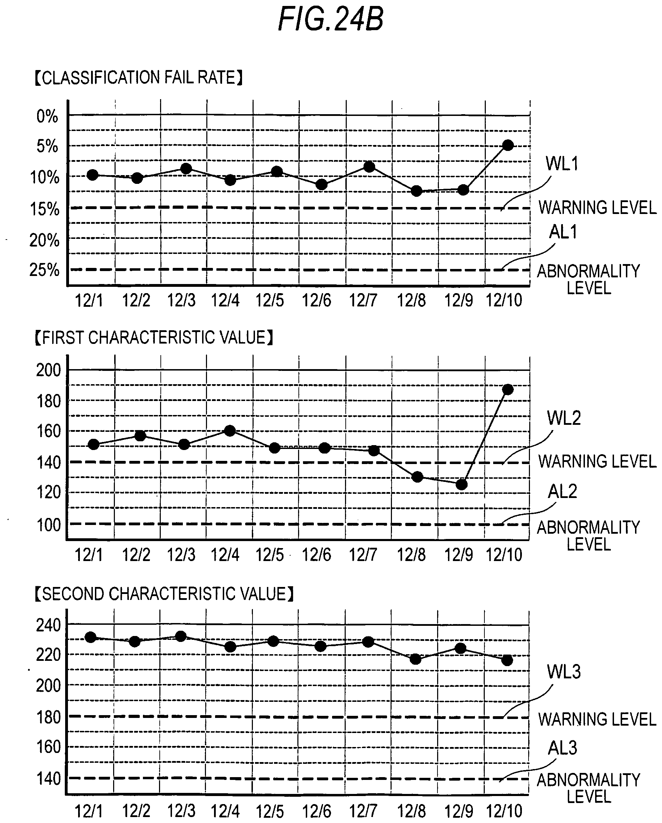

Fig. 24A is a diagram showing an example of the first graph GR1, the second graph GR2, and the third graph GR3. Fig. 24B is a diagram showing another example of the first graph GR1, the second graph GR2, and the third graph GR3. Fig. 24A shows an example in that the light intensity of the lamp 38 of the microscope unit 3a is gradually decreased and the lamp is exchanged on December 10. Fig. 24B shows an example in that the staining property of the smear slide preparing apparatus 2 is normally decreased by the change of the external environment (temperature) in season, and the setting of a staining time is changed on December 10. As shown in Figs. 24A and 24B, the classification fail rates are plotted for every date of the current month on the first graph GR1. In addition, the broken line WL1 showing a warning level of the classification fail rate and the broken line AL1 showing an abnormality level of the classification fail rate are displayed on the first graph GR1. In addition, the first characteristic values are plotted for every date of the current month on the second graph GR2. In addition, the broken line WL2 showing a warning level of the first characteristic value and the broken line AL2 showing an abnormality level of the first characteristic value are displayed on the second graph GR2. The second characteristic values are plotted for every date of the current month on the third graph GR3. In addition, the broken line WL3 showing a warning level of the second characteristic value and the broken line AL3 showing an abnormality level of the second characteristic value are displayed on the third graph GR3.

In the example shown in Fig. 24A, the second average background G-value which is the second characteristic value keeps a normal level in a substantial constant in a period of time from December 1 to 5. After December 6, the second average background G-value is gradually decreased and less than the warning level after December 7. As a result, the light intensity of the lamp 38 is decreased, and it can be known that there is a need to exchange the lamp after December 7. On the other hand, the second average nucleus G-value which is the first characteristic value keeps a normal level in a substantial constant over the entire period of time. In the first graph GR1 in this example, the classification fail rate keeps a normal level in a substantial constant in the period of time from December 1 to 8. It can be known that the first graph GR1 is greater than the warning level of 15% on December 9. Since only the second characteristic value is decreased in this period of time but the first characteristic value is not decreased, it can be known that the increase of the classification fail rate is caused by the decrease of the lamp light intensity. Therefore, by displaying the temporal fluctuation in the second characteristic value, the user can be known that it is time to carry out exchanging of the lamp before the classification fail rate caused by the shortage of the light intensity reaches the abnormality level. Then, the user implements the lamp exchange on December 10, so that the second characteristic value and the classification fail rate are recovered at the same date. Therefore, by displaying the temporal fluctuation in the second characteristic value which indicates the characteristic of the light intensity of the imaging unit of the microscope unit 3a, the user can easily carry out the accuracy management of the imaging unit of the microscope unit 3a.

In the example shown in Fig. 24B, the second average nucleus G-value which is the first characteristic value keeps a normal level in a substantial constant in the period of time from December 1 to 7. It can be known that the staining property of the smear slide preparing apparatus 2 is affected by the seasonal environment, so that the first characteristic value in this period of time is normal but close to the warning level. In addition, the first characteristic value is decreased after December 8 and less than the warning level after December 8. Therefore, it can be known that the stained state of the smear slide preparing apparatus 2 is worsened after December 8, so that there is a need to maintain the smear slide preparing apparatus 2. On the other hand, the second average background G-value which is the second characteristic value keeps a normal level in a substantial constant over the entire period of time. In the first graph GR1 in this example, the classification fail rate is in the normal range in the period of time from December 1 to 9. It can be known that the classification fail rate keeps a substantial constant level close to the warning level. In this period of time, since only the level of the first characteristic value is low and the second characteristic value keeps a high level, it can be known that keeping the classification fail rate close to the warning level is caused by deterioration of the stained state. Therefore, by displaying the temporal fluctuation in the first characteristic value, the user can be known that it is time to readjust the setting relating to the staining of the smear slide preparing apparatus 2 before the classification fail rate caused by deterioration of the stained state reaches the abnormality level. Then, the use changes the setting of the staining time on December 10, so that the first characteristic value is increased at the same date, and the classification fail rate becomes lower. Therefore, by displaying the temporal fluctuation in the first characteristic value which indicates the stained state of the blood smear slide. The user can easily carry out the accuracy management of the smear slide preparing apparatus 2.

The user selects the shutdown continuation button BT in a state where the accuracy management screen CW is being displayed. Therefore, the user can issue an instruction for performing the shutdown process to the imaging processing unit 3b. The CPU 321 a stands by to receive the instruction for performing the shutdown (NO in Step S712). When the CPU 321a receives the instruction for performing the shutdown process (YES in Step S712), the shutdown process is performed (Step S713). In the shutdown process, there is performed a termination process of displaying the accuracy management screen CW, a termination process of the image processing program 324a and the like. When the shutdown process is ended, the CPU 321a completes the process.

With such a configuration, when the image processing unit 3b is shut down such as at the time of terminating the operation of a day's specimen process, the accuracy management screen CW is securely displayed. Therefore, it can be prevented that the user forgets to check the stained state of the smear slide preparing apparatus 2 and the state of the imaging unit of the microscope unit 3a. In addition, the maintenance of the specimen processing system 1 is easily carried out.

In addition, the second graph GR2 showing the temporal fluctuation in the first characteristic value, and the third graph GR3 showing the temporal fluctuation in the second characteristic value are included in the accuracy management screen CW. Therefore, only by just confirming the accuracy management screen CW, the user can carry out the accuracy management of the microscope unit 3a and the smear slide preparing apparatus 2.

### (Other Embodiments)

Further, in the above-described embodiments, the configuration has been described relating to the specimen processing system provided with the specimen imaging apparatus which images the blood smear slide so as to obtain the blood cell images, but the invention is not limited thereto. The specimen processing system provided with the specimen imaging apparatus may be configured such that tissue is gathered and sliced from a human body, attached to a slide glass, and then stained by a stain solution so as to obtain a specimen which is imaged to acquire a cell image including a cell shape.

In addition, in the above-described embodiments, the configuration has been described in which the accuracy management screen CW is displayed which includes the second graph GR2 showing the temporal fluctuation in the first characteristic value relating to the stained state of the specimen and the third graph GR3 showing the temporal fluctuation in the second characteristic value relating to the lamp state to be used for imaging are displayed, but the invention is not limited thereto. The second graph GR2 and the third graph GR3 may be displayed in separate screens. In addition, it may be configured such that the first characteristic value is calculated and displayed in the second graph GR2, but the second characteristic value is not calculated and not displayed in the third graph GR3. On the contrary, it may be configured such that the second characteristic value is calculated and displayed in the third graph GR3, but the first characteristic value is not calculated and not displayed in the second graph GR2.

In addition, in the above-described embodiments, the configuration has been described in which the staining abnormality of the specimen and the lamp light intensity abnormality to be used for imaging are detectible for each smear slide, but the invention is not limited thereto. It may be configured such that the staining abnormality of the specimen and the lamp light intensity abnormality are not detected. In addition, it may be configured such that the staining abnormality of the specimen is detectible but the lamp light intensity abnormality is not detectible. Alternatively, it may be configured such that the lamp light intensity abnormality is detectible but the staining abnormality of the specimen is not detectible.

In addition, in the above-described embodiments, the configuration has been described in which the second average nucleus G-value relating to the G value of the nucleus area of the blood cell image is used as the first characteristic value displaying the characteristic of the nucleus area of the blood cell image so as to display the second graph GR2 indicating the fluctuation in the first characteristic value, but the invention is not limited thereto. Instead of the second average nucleus G-value, it may be configured such that a value (the first average nucleus B-value or the first average nucleus R-value) obtained by averaging the B values or the R values of the nucleus area of the blood cell image for each specimen is obtained, a value (the second average nucleus B-value or the second average nucleus R-value) obtained by averaging the first average nucleus B-values or the first average nucleus R-values for the plural specimens processed in a day is calculated, and displays a graph showing the fluctuation in the first characteristic value by using the second average nucleus B-value or the second average nucleus R-value as the first characteristic value.

In addition, in the above-described embodiments, the configuration has been described in which the second average background G-value relating to the G value of the background area of the blood cell image is used as the second characteristic value displaying the characteristic of the background area of the blood cell image so as to display the third graph GR3 indicating the fluctuation in the second characteristic value, but the invention is not limited thereto. Instead of the second average background G-value, it may be configured such that a value (the first average background B-value or the first average background R-value) obtained by averaging the B values or the R values of the background area of the blood cell image for each specimen is obtained, a value (the second average background B-value or the second average background R-value) obtained by averaging the first average background B-values or the first average background R-values for the plural specimens processed in a day is calculated, and displays a graph showing the fluctuation in the second characteristic value by using the second average background B-value or the second average background R-value as the second characteristic value.

In addition, in the above-described embodiments, the configuration has been described in which the blood cell image of the specimen analyzed as normal by the blood cell analyzing apparatus 4 is used to obtain the first characteristic value and the second characteristic value, but the invention is not limited thereto. The nucleus state of the blood cell of the abnormal specimen may be different from that of the normal specimen in some cases. Therefore, the first characteristic value to be obtained using the nucleus area of the blood cell image may be calculated using the blood cell image of the specimen which is normal as the analysis result of the blood cell analyzing apparatus 4. Further, the second characteristic value to be obtained using the background area of the blood cell image, which is considered to have no difference in the abnormal specimen and the normal specimen, may be calculated using the blood cell image of all the specimens in which the blood smear slides are prepared. In addition, the first characteristic value or both the first characteristic value and the second characteristic value may be calculated using the specimen other than the specimens in which the abnormality affecting the nucleus color of the blood cell is detected, among all the abnormalities detected by the blood cell analyzing apparatus 4.

In addition, in the above-described embodiments, the configuration has been described in which the first characteristic value and the second characteristic value are obtained using the blood cell image of the neutrophil, but the invention is not limited thereto. It may be configured such that the first characteristic value and the second characteristic value are obtained using other kinds of white blood cells such as the monocyte, the eosinophil, the basophil, or the lymphocyte instead of the neutrophil. In this case, since the number of the neutrophils is maximum in the white blood cell included in a healthy person's blood, the first characteristic value and the second characteristic value, in which the stained state and the state of the imaging unit are accurately reflected using the blood cell image of the neutrophil, can be obtained. In addition, since all the white blood cells are stained by a stain solution, it may be configured such the first characteristic value indicating the characteristic of the stained state of the white blood cell is calculated using the white blood cell area in the blood cell image. In addition, it may be configured such that the first characteristic value and the second characteristic value are calculated using the blood cell images of all kinds of blood cell types instead of the blood cell image relating to a specific blood cell type.

In addition, in the above-described embodiments, the configuration has been described in which the first characteristic value and the second characteristic value are calculated using the plural smear slides of a normal specimen (which is a specimen gathered from a human subject), but the invention is not limited thereto. It may be configured such that, when a predetermined stain is implemented, a smear slide is prepared from a standard specimen showing a predetermined nucleus G-value and a predetermined background G-value, the plural blood cell images are obtained by imaging the smear slide, the first nucleus G-value and the first background G-value are obtained by averaging the nucleus G-values and the background G-values of the plural blood cell images, the first nucleus G-value is used as the first characteristic value and the first background G-value is used as the second characteristic value.

In addition, in the above-described embodiments, the configuration has been described in which the first characteristic value relating to the stained state of the smear slide and the second characteristic value relating to the state of the lamp are calculated by prompting a computer to perform an image processing program so as to serve as the image processing unit 3b, and the temporal fluctuation in the first characteristic value and the temporal fluctuation in the second characteristic value are displayed, but the invention is not limited thereto. It may be configured such that a dedicated hardware such as FPGA, ASIC or the like capable of performing the same process as that of the image processing program are employed so as to calculate the first characteristic value and the second characteristic value, and the temporal fluctuation in the first characteristic value and the temporal fluctuation in the second characteristic value are displayed.

In addition, in the above-described embodiments, the configuration has been described in which the fluctuation in the first characteristic value and the fluctuation in the second characteristic value are displayed by the image processing unit 3b, but the invention is not limited thereto. It may be configured such that the fluctuation in the first characteristic value and the fluctuation in the second characteristic value are displayed by the blood cell image display unit 3c which is provided independently of the image processing unit 3b. In addition, it may be configured such that the fluctuation in the first characteristic value and the fluctuation in the second characteristic value are displayed by one unit having the function of the image processing unit 3b as well as the function of the blood cell image display unit 3c.

In addition, in the above-described embodiments, the configuration has been described in which the fluctuation in the first characteristic value and the fluctuation in the second characteristic value are displayed at the time of shutdown of the image processing unit 3b, but the invention is not limited thereto. It may be configured such that the fluctuation in the first characteristic value and the fluctuation in the second characteristic value are displayed at the time of starting the image processing unit 3b. Therefore, when the image processing unit 3b starts, a user can confirm the accuracy management screen. Further, it can be prevented that the user forgets to check the stained state of the smear slide preparing apparatus 2 and the state of the imaging unit of the microscope unit 3a. In addition, the maintenance of the specimen processing system 1 is easily carried out. In addition, it may be configured such that the image processing unit 3b can receive the display instruction of the accuracy management screen from the user, and when the display instruction of the accuracy management screen is given by the user, the first characteristic value and the second characteristic value are calculated and the accuracy management screen is displayed.

In addition, before the shutdown of at least the image processing unit 3b is performed, it is preferable that the fluctuation in the first characteristic value and the fluctuation in the second characteristic value be displayed. That is, it may be configured such that, when an instruction is given to shut down the entire specimen imaging apparatus 3 instead of the shutdown of only the image processing unit 3b, the fluctuation in the first characteristic value and the fluctuation in the second characteristic value are displayed. Alternatively, it may be configured such that, when an instruction is given to shut down the entire specimen processing system 1, the fluctuation in the first characteristic value and the fluctuation in the second characteristic value are displayed.

In addition, in the above-described embodiments, after an instruction is given to shut down the image processing unit 3b, the CPU 321 a averages the first average nucleus G-values and the first average background G-values in a day so as to calculate the second average nucleus G-value and the second average background G-value, and displays the accuracy management screen CW on the image display section 322, but the invention is not limited thereto. It may be configured such that the CPU 321 a averages the first average nucleus G-values and the first average background G-values in a day, which are obtained at the point of time before an instruction is given to shut down the image processing unit 3b, so as to sequentially calculate the second average nucleus G-value and the second average background G-value. When the shutdown instruction is given, the CPU 321a displays the accuracy management screen CW prepared using the finally calculated second average nucleus G-value and second average background G-value on the image display section 322.

In the above-described embodiments, the configuration has been described in which all the processes of the image processing program 324a are executed by the single computer 320. However, the invention is not limited to this. A distribution system also can be employed for distributing the same processes as the above-described image processing program 324a to plural apparatuses (computers) and executing the processes.

In the above-described embodiments, the configuration has been described in which all the processes of the blood cell image display program 334a are executed by the single computer 330. However, the invention is not limited to this. A distribution system also can be employed for distributing the same processes as the above-described blood cell image display program 334a to plural apparatuses (computers) and executing the processes.

In addition, in the above-described embodiments, the smear slide preparing apparatus 2 and the specimen imaging apparatus 3 are separately configured from each other, but the invention is not limited thereto. It may be configured by one unit having the function of the smear slide preparing apparatus 2 as well as the function of the specimen imaging apparatus 3.

In addition, in the above-described embodiments, when the first average background G-value BA shows an abnormal value, the error screen for notifying the occurrence of the lamp light intensity abnormality is displayed on the image display section 322, and when the first average nucleus G-value NA shows an abnormal value, the error screen for notifying the occurrence of the staining abnormality is displayed on the image display section 322, but the invention is not limited thereto. A warning beep for notifying the occurrence of the lamp light intensity abnormality and a warning beep for notifying the occurrence of the staining abnormality may blow.

## Claims

1. A cell image processing apparatus (1) comprising:
an imaging unit (3) for imaging a specimen smeared on a slide glass, and obtaining a cell image of a cell included in the smeared specimen;
a display (322); and
a processing unit (321a) being configured to perform operations comprising:
obtaining a plurality of characteristic values based on a plurality of cell images obtained by the imaging unit (3), each of the plurality of characteristic values respectively representing a predetermined characteristic of each of the plurality of cell images; and
controlling the display (322) so as to display a screen showing a temporal fluctuation in the obtained characteristic values, the cell image processing apparatus further comprising
a staining unit (24) for staining the cell included in the specimen smeared on the slide glass,
wherein the processing unit (321a) obtains a first characteristic value representing a state of a staining unit (24), said first characteristic value relating to a brightness value of a color component of pixels in a nucleus area in the cell image, and obtains a second characteristic value representing a state of the imaging unit (3), said second characteristic value relating to a brightness value of a color component of pixels in a background area in the cell image.

2. The cell image processing apparatus (1) according to claim 1,
wherein the processing unit (321a) controls the display (322) so as to display the screen which comparably shows the characteristic values and an index relating to an abnormality of the characteristic value.

3. The cell image processing apparatus (1) according to claim 1 or 2,
wherein the processing unit (321a) controls the display (322) so as to display the screen which shows daily fluctuation of the characteristic values in chronological order.

4. The cell image processing apparatus (1) according to any one of claims 1 to 3, wherein
the imaging unit (3) is configured to obtain the cell image including a brightness of a predetermined color component; and
the processing unit (321a) obtains information relating to the brightness of the predetermined color component of the cell image as the characteristic value.

5. The cell image processing apparatus (1) according to any one of claims 1 to 4, further comprising a smearing unit (22) for smearing the specimen on the slide glass.

6. The cell image processing apparatus (1) according to claim 1,
wherein the processing unit (321a) is configured to perform operations comprising:
correcting a brightness of the cell image obtained by the imaging unit (3); and
obtaining the first characteristic value representing a state of the staining unit (24) based on an image of a cell portion in the corrected cell image.

7. The cell image processing apparatus (1) according to any one of claims 1 to 6, wherein
the imaging unit (3) comprises a light source; and
the processing unit (321a) obtains the second characteristic value representing a light intensity of the light source.

8. The cell image processing apparatus (1) according to any one of claims 1 to 7,
wherein the processing unit (321a) is configured to perform operations comprising:
obtaining a plurality of numerical values, based on each of a plurality of cell images obtained by the imaging unit (3) in a predetermined period of time, each of the plurality of numerical values respectively representing the predetermined characteristic of each of the plurality of cell images; and
obtaining the characteristic value based on the plurality of obtained numerical values.

9. The cell image processing apparatus (1) according to claim 8,
wherein the processing unit (321a) obtains the plurality of numerical values based on each of a plurality of cell images which are obtained from specimens meeting a predetermined condition among a plurality of specimens imaged by the imaging unit (3) in the predetermined period of time.

10. The cell image processing apparatus (1) according to any one of claims 1 to 9,
wherein the processing unit (321a) is configured to perform operations comprising: receiving a shutdown instruction; and controlling the display (322) so as to display the screen based on the received shutdown instruction.

11. The cell image processing apparatus (1) according to any one of claims 1 to 10,
wherein the processing unit (321a) is configured to perform operations comprising:
detecting an abnormality of the characteristic value by comparing the characteristic value with a predetermined standard value for each specimen; and
controlling the display (322) so as to display information relating to the abnormality of the characteristic value when the abnormality of the characteristic value has been detected.

12. The cell image processing apparatus (1) according to any one of claims 1 to 11,
wherein the processing unit (321a) classifies the cell based on the cell image.

13. A cell image processing method comprising: imaging a plurality of specimens each smeared on the slide glass, and obtaining a plurality of cell images, each of the plurality of cell images respectively relating to the cell included in each of the smeared specimens;
obtaining a plurality of characteristic values based on the plurality of cell images, each of the plurality of characteristic values respectively representing a predetermined characteristic of each of the plurality of cell images; and
displaying a screen showing a temporal fluctuation in the characteristic values on a display,
the cell image processing method further comprising staining the cell included in the specimen smeared on the slide glass,
wherein obtaining a plurality of characteristic values based on the plurality of cell images comprises obtaining a first characteristic value representing a state of a staining unit, said first characteristic value relating to a brightness value of a color component of pixels in a nucleus area in the cell image, and obtaining a second characteristic value representing a state of an imaging unit, said second characteristic value relating to a brightness value of a color component of pixels in a background area in the cell image.

14. A computer program product comprising:
a computer readable medium; and
instructions, on the computer readable medium, adapted to enable a general purpose computer to perform operations comprising:
obtaining a plurality of cell images, each of the plurality of cell images respectively relating to a cell included in each of specimens each smeared on a slide glass;
obtaining a plurality of characteristic values based on the plurality of cell images, each of the plurality of characteristic values respectively representing a predetermined characteristic of each of the plurality of cell images; and
controlling a display so as to display a screen which shows a temporal fluctuation in the characteristic values,
wherein obtaining a plurality of characteristic values based on the plurality of cell images comprises obtaining a first characteristic value representing a state of a staining unit, said first characteristic value relating to a brightness value of a color component of pixels in a nucleus area in the cell image, and obtaining a second characteristic value representing a state of an imaging unit, said second characteristic value relating to a brightness value of a color component of pixels in a background area in the cell image.

## Patentansprüche

1. Zellbild-Verarbeitungsvorrichtung (1), umfassend:
eine Abbildungseinheit (3) zum Abbilden einer Probe, die auf ein Objektträgerglas geschmiert ist, und zum Erhalten eines Zellbildes einer Zelle, die in der geschmierten Probe enthalten ist;
eine Anzeige (322); und
eine Verarbeitungseinheit (321a), die dazu konfiguriert ist, Vorgänge auszuführen, die umfassen:
Erhalten einer Mehrzahl von charakteristischen Werten auf Basis einer Mehrzahl von Zellbildern, die von der Abbildungseinheit (3) erhalten wurden, wobei jeder der Mehrzahl von charakteristischen Werten jeweils eine vorbestimmte Charakteristik von jedem der Mehrzahl von Zellbildern darstellt; und
Steuern der Anzeige (322), um einen Bildschirm anzuzeigen, der eine zeitliche Fluktuation in den erhaltenen charakteristischen Werten zeigt, wobei die Zellbild-Verarbeitungsvorrichtung ferner umfasst:
eine Färbungseinheit (24) zum Färben der Zelle, die in der Probe enthalten ist, die auf das Objektträgerglas geschmiert ist,
wobei die Verarbeitungseinheit (321a) einen ersten charakteristischen Wert erhält, der einen Zustand einer Färbungseinheit (24) darstellt, wobei sich der erste charakteristische Wert auf einen Helligkeitswert einer Farbkomponente von Pixeln in einem Zellkernbereich in dem Zellbild bezieht, und einen zweiten charakteristischen Wert erhält, der einen Zustand der Abbildungseinheit (3) darstellt, wobei sich der zweite charakteristische Wert auf einen Helligkeitswert einer Farbkomponente von Pixeln in einem Hintergrundbereich im Zellbild bezieht.

2. Zellbild-Verarbeitungsvorrichtung (1) nach Anspruch 1,
wobei die Verarbeitungseinheit (321a) die Anzeige (322) so steuert, dass sie den Bildschirm anzeigt, der die charakteristischen Werte und einen Index, der sich auf eine Anomalie des charakteristischen Werts bezieht, vergleichbar anzeigt.

3. Zellbild-Verarbeitungsvorrichtung (1) nach Anspruch 1 oder 2,
wobei die Verarbeitungseinheit (321a) die Anzeige (322) so steuert, dass sie den Bildschirm anzeigt, der tägliche Fluktuation der charakteristischen Werte in chronologischer Reihenfolge zeigt.

4. Zellbild-Verarbeitungsvorrichtung (1) nach einem der Ansprüche 1 bis 3, wobei
die Abbildungseinheit (3) dazu konfiguriert ist, das Zellbild inklusive einer Helligkeit einer vorbestimmten Farbkomponente zu erhalten; und
die Verarbeitungseinheit (321a) Informationen erhält, die sich auf die Helligkeit der vorbestimmten Farbkomponente des Zellbildes als den charakteristischen Wert beziehen.

5. Zellbild-Verarbeitungsvorrichtung (1) nach einem der Ansprüche 1 bis 4, ferner umfassend eine Schmiereinheit (22) zum Schmieren der Probe auf das Objektträgerglas.

6. Zellbild-Verarbeitungsvorrichtung (1) nach Anspruch 1,
wobei die Verarbeitungseinheit (321a) dazu konfiguriert ist, Vorgänge auszuführen, die umfassen:
Korrigieren einer Helligkeit des Zellbildes, das von der Abbildungseinheit (3) erhalten wurde; und
Erhalten des ersten charakteristischen Werts, der einen Zustand der Färbungseinheit (24) darstellt, auf Basis eines Bildes eines Zellbereichs in dem korrigierten Zellbild.

7. Zellbild-Verarbeitungsvorrichtung (1) nach einem der Ansprüche 1 bis 6, wobei
die Abbildungseinheit (3) eine Lichtquelle umfasst; und
die Verarbeitungseinheit (321a) den zweiten charakteristischen Wert erhält, der eine Lichtintensität der Lichtquelle darstellt.

8. Zellbild-Verarbeitungsvorrichtung (1) nach einem der Ansprüche 1 bis 7,
wobei die Verarbeitungseinheit (321a) dazu konfiguriert ist, Vorgänge auszuführen, die umfassen:
Erhalten einer Mehrzahl von numerischen Werten auf Basis von jedem von einer Mehrzahl von Zellbildern, die von der Abbildungseinheit (3) in einem vorbestimmten Zeitraum erhalten werden, wobei jeder der Mehrzahl von numerischen Werten jeweils die vorbestimmte Charakteristik von jedem der Mehrzahl von Zellbildern darstellt; und Erhalten des charakteristischen Werts auf Basis der Mehrzahl von erhaltenen numerischen Werten.

9. Zellbild-Verarbeitungsvorrichtung (1) nach Anspruch 8,
wobei die Verarbeitungseinheit (321a) die Mehrzahl von numerischen Werten auf Basis von jedem von einer Mehrzahl von Zellbildern erhält, die aus Proben erhalten werden, die eine vorbestimmte Bedingung erfüllen, unter einer Mehrzahl von mittels der Abbildungseinheit (3) in dem vorbestimmten Zeitraum abgebildeten Proben.

10. Zellbild-Verarbeitungsvorrichtung (1) nach einem der Ansprüche 1 bis 9,
wobei die Verarbeitungseinheit (321a) dazu konfiguriert ist, Vorgänge auszuführen, die umfassen: Empfangen einer Abschaltungsanweisung; und Steuern der Anzeige (322), so dass sie den Bildschirm auf Basis der empfangenen Abschaltungsanweisung anzeigt.

11. Zellbild-Verarbeitungsvorrichtung (1) nach einem der Ansprüche 1 bis 10,
wobei die Verarbeitungseinheit (321a) dazu konfiguriert ist, Vorgänge auszuführen, die umfassen:
Erkennen einer Anomalie des charakteristischen Werts, indem sie den charakteristischen Wert mit einem vorbestimmten Standardwert für jede Probe vergleicht; und
Steuern der Anzeige (322), so dass sie Informationen bezüglich der Anomalie des charakteristischen Werts anzeigt, wenn die Anomalie des charakteristischen Werts erkannt wurde.

12. Zellbild-Verarbeitungsvorrichtung (1) nach einem der Ansprüche 1 bis 11,
wobei die Verarbeitungseinheit (321a) die Zelle auf Basis des Zellbildes klassifiziert.

13. Zellbild-Verarbeitungsverfahren, umfassend: Abbilden einer Mehrzahl von Proben, die jeweils auf das Objektträgerglas geschmiert sind, und Erhalten einer Mehrzahl von Zellbildern, jeweils von der Mehrzahl von Zellbildern, die sich jeweils auf die Zelle beziehen, die in jeder der geschmierten Proben erhalten ist;
Erhalten einer Mehrzahl von charakteristischen Werten auf Basis der Mehrzahl von Zellbildern, wobei jeder der Mehrzahl von charakteristischen Werten jeweils eine vorbestimmte Charakteristik von jedem der Mehrzahl von Zellbildern darstellt; und
Anzeigen eines Bildschirms, der eine zeitliche Fluktuation in den erhaltenen charakteristischen Werten zeigt, auf einer Anzeige,
wobei das Zellbild-Verarbeitungsverfahren ferner ein Färben der Zelle umfasst, die in der Probe enthalten ist, die auf das Objektträgerglas geschmiert ist,
wobei das Erhalten einer Mehrzahl von charakteristischen Werten auf Basis der Mehrzahl von Zellbildern ein Erhalten eines ersten charakteristischen Werts umfasst, der einen Zustand einer Färbungseinheit darstellt, wobei sich der erste charakteristische Wert auf einen Helligkeitswert einer Farbkomponente von Pixeln in einem Zellkernbereich in dem Zellbild bezieht, und ein Erhalten eines zweiten charakteristischen Werts umfasst, der einen Zustand einer Abbildungseinheit darstellt, wobei sich der zweite charakteristische Wert auf einen Helligkeitswert einer Farbkomponente von Pixeln in einem Hintergrundbereich im Zellbild bezieht.

14. Computerprogrammprodukt, umfassend:
ein computerlesbares Medium; und
Anweisungen auf dem computerlesbaren Medium, die dazu angepasst sind, einen Universalcomputer dazu zu veranlassen, Vorgänge auszuführen, die umfassen:
Erhalten einer Mehrzahl von Zellbildern, wobei sich jedes der Mehrzahl von Zellbildern jeweils auf eine Zelle bezieht, die in jeder von Proben erhalten ist, die auf ein Objektträgerglas geschmiert sind;
Erhalten einer Mehrzahl von charakteristischen Werten auf Basis der Mehrzahl von Zellbildern, wobei jeder der Mehrzahl von charakteristischen Werten jeweils eine vorbestimmte Charakteristik von jedem der Mehrzahl von Zellbildern darstellt; und
Steuern einer Anzeige, um einen Bildschirm anzuzeigen, der eine zeitliche Fluktuation in den charakteristischen Werten anzeigt, wobei das Erhalten einer Mehrzahl von charakteristischen Werten auf Basis der Mehrzahl von Zellbildern ein Erhalten eines ersten charakteristischen Werts umfasst, der einen Zustand einer Färbungseinheit darstellt, wobei sich der erste charakteristische Wert auf einen Helligkeitswert einer Farbkomponente von Pixeln in einem Zellkernbereich in dem Zellbild bezieht, und ein Erhalten eines zweiten charakteristischen Werts umfasst, der einen Zustand einer Abbildungseinheit darstellt, wobei sich der zweite charakteristische Wert auf einen Helligkeitswert einer Farbkomponente von Pixeln in einem Hintergrundbereich im Zellbild bezieht.

## Revendications

1. Appareil de traitement d'image de cellule (1) comprenant :
une unité d'imagerie (3) pour prendre une image d'un spécimen étalé sur une lame de verre et pour obtenir une image de cellule d'une cellule incluse dans le spécimen étalé ;
un afficheur (322) ; et
une unité de traitement (321a) étant configurée pour effectuer des opérations comprenant :
l'obtention d'une pluralité de valeurs caractéristiques sur la base d'une pluralité d'images de cellule obtenues par l'unité d'imagerie (3), chacune de la pluralité de valeurs caractéristiques représentant respectivement une caractéristique prédéterminée de chacune de la pluralité d'images de cellule ; et
la commande de l'afficheur (322) afin d'afficher un écran présentant une fluctuation temporelle des valeurs caractéristiques obtenues, l'appareil de traitement d'image de cellule comprenant en outre
une unité de coloration (24) pour coloration de la cellule incluse dans le spécimen étalé sur la lame de verre,
dans lequel l'unité de traitement (321a) obtient une première valeur caractéristique représentant un état d'une unité de coloration (24), ladite première valeur caractéristique se rapportant à une valeur de luminosité d'une composante colorée de pixels dans une zone de noyau dans l'image de cellule, et obtient une seconde valeur caractéristique représentant un état de l'unité d'imagerie (3), ladite seconde valeur caractéristique se rapportant à une valeur de luminosité d'une composante colorée de pixels dans une zone de fond dans l'image de cellule.

2. Appareil de traitement d'image de cellule (1) selon la revendication 1, dans lequel l'unité de traitement (321a) commande l'afficheur (322) afin d'afficher l'écran qui présente comparativement les valeurs caractéristiques et un indice se rapportant à une anomalie de la valeur caractéristique.

3. Appareil de traitement d'image de cellule (1) selon la revendication 1 ou 2,
dans lequel l'unité de traitement (321a) commande l'afficheur (322) afin d'afficher l'écran qui présente une fluctuation quotidienne des valeurs caractéristiques dans un ordre chronologique.

4. Appareil de traitement d'image de cellule (1) selon l'une quelconque des revendications 1 à 3, dans lequel
l'unité d'imagerie (3) est configurée pour obtenir l'image de cellule incluant une luminosité d'une composante colorée prédéterminée ; et
l'unité de traitement (321a) obtient des informations se rapportant à la luminosité de la composante colorée prédéterminée de l'image de cellule en tant que valeur caractéristique.

5. Appareil de traitement d'image de cellule (1) selon l'une quelconque des revendications 1 à 4, comprenant en outre une unité d'étalement (22) pour étaler le spécimen sur la lame de verre.

6. Appareil de traitement d'image de cellule (1) selon la revendication 1, dans lequel l'unité de traitement (321a) est configurée pour effectuer des opérations comprenant :
la correction d'une luminosité de l'image de cellule obtenue par l'unité d'imagerie (3) ; et
l'obtention de la première valeur caractéristique représentant un état de l'unité de coloration (24) sur la base d'une image d'une portion de cellule dans l'image de cellule corrigée.

7. Appareil de traitement d'image de cellule (1) selon l'une quelconque des revendications 1 à 6, dans lequel
l'unité d'imagerie (3) comprend une source de lumière ; et
l'unité de traitement (321a) obtient la seconde valeur caractéristique représentant une intensité lumineuse de la source de lumière.

8. Appareil de traitement d'image de cellule (1) selon l'une quelconque des revendications 1 à 7,
dans lequel l'unité de traitement (321a) est configurée pour effectuer des opérations comprenant :
l'obtention d'une pluralité de valeurs numériques, sur la base de chacune d'une pluralité d'images de cellule obtenues par l'unité d'imagerie (3) dans une période de temps prédéterminée, chacune de la pluralité de valeurs numériques représentant respectivement la caractéristique prédéterminée de chacune de la pluralité d'images de cellule ; et
l'obtention de la valeur caractéristique sur la base de la pluralité de valeurs numériques obtenues.

9. Appareil de traitement d'image de cellule (1) selon la revendication 8, dans lequel l'unité de traitement (321a) obtient la pluralité de valeurs numériques sur la base de chacune d'une pluralité d'images de cellule qui sont obtenues à partir de spécimens satisfaisant à une condition prédéterminée parmi une pluralité de spécimens pris en image par l'unité d'imagerie (3) dans la période de temps prédéterminée.

10. Appareil de traitement d'image de cellule (1) selon l'une quelconque des revendications 1 à 9,
dans lequel l'unité de traitement (321a) est configurée pour effectuer des opérations comprenant : la réception d'une instruction d'arrêt ; et
la commande de l'afficheur (322) afin d'afficher l'écran sur la base de l'instruction d'arrêt reçue.

11. Appareil de traitement d'image de cellule (1) selon l'une quelconque des revendications 1 à 10,
dans lequel l'unité de traitement (321a) est configurée pour effectuer des opérations comprenant :
la détection d'une anomalie de la valeur caractéristique en comparant la valeur caractéristique à une valeur standard prédéterminée pour chaque spécimens ; et
la commande de l'afficheur (322) afin d'afficher des informations se rapportant à l'anomalie de la valeur caractéristique quand l'anomalie de la valeur caractéristique a été détectée.

12. Appareil de traitement d'image de cellule (1) selon l'une quelconque des revendications précédentes 1 à 11,
dans lequel l'unité de traitement (321a) classifie la cellule sur la base de l'image de cellule.

13. Procédé de traitement d'image de cellule comprenant : l'imagerie d'une pluralité de spécimens étalés chacun sur la lame de verre, et l'obtention d'une pluralité d'images de cellule, chacune de la pluralité d'images de cellule se rapportant respectivement à la cellule incluse dans chacun des spécimens étalés ;
l'obtention d'une pluralité de valeurs caractéristiques sur la base de la pluralité d'images de cellule, chacune de la pluralité de valeurs caractéristiques représentant respectivement une caractéristique prédéterminée de chacune de la pluralité d'images de cellule ; et
l'affichage d'un écran présentant une fluctuation temporelle des valeurs caractéristiques sur un afficheur,
le procédé de traitement d'image de cellule comprenant en outre la coloration de la cellule incluse dans le spécimen étalé sur la lame de verre,
dans lequel l'obtention d'une pluralité de valeurs caractéristiques sur la base de la pluralité d'images de cellule comprend l'obtention d'une première valeur caractéristique représentant un état d'une unité de coloration, ladite première valeur caractéristique se rapportant à une valeur de luminosité d'une composante colorée de pixels dans une zone de noyau dans l'image de cellule, et l'obtention d'une seconde valeur caractéristique représentant un état d'une unité d'imagerie, ladite seconde valeur caractéristique se rapportant à une valeur de luminosité d'une composante colorée de pixels dans une zone de fond dans l'image de cellule.

14. Produit formant programme informatique comprenant :
un support lisible par ordinateur ; et
des instructions, sur le support lisible par ordinateur, conçues pour permettre à un ordinateur polyvalent d'effectuer des opérations comprenant :
l'obtention d'une pluralité d'images de cellule, chacune de la pluralité d'images de cellule se rapportant respectivement à une cellule incluse dans chacun de spécimens étalés chacun sur une lame de verre ;
l'obtention d'une pluralité de valeurs caractéristiques sur la base de la pluralité d'images de cellule, chacune de la pluralité de valeurs caractéristiques représentant respectivement une caractéristique prédéterminée de chacune de la pluralité d'images de cellule; et
la commande d'un afficheur afin d'afficher un écran qui présente une fluctuation temporelle des valeurs caractéristiques,
dans lequel l'obtention d'une pluralité de valeurs caractéristiques sur la base de la pluralité d'images de cellule comprend l'obtention d'une première valeur caractéristique représentant un état d'une unité de coloration, ladite première valeur caractéristique se rapportant à une valeur de luminosité d'une composante colorée de pixels dans une zone de noyau dans l'image de cellule, et l'obtention d'une seconde valeur caractéristique représentant un état d'une unité d'imagerie, ladite seconde valeur caractéristique se rapportant à une valeur de luminosité d'une composante colorée de pixels dans une zone de fond dans l'image de cellule.
